# EUROPEAN PATENT APPLICATION

(11) **EP 4 576 884 A1**
(43) Date of publication of application: **25.06.2025**
(21) Application number: 23864693.9
(22) Date of filing: 12.09.2023
(51) Int. Cl.: H04W 52/02

(54) **COMMUNICATION METHOD AND APPARATUS**

(30) Priority: 15.09.2022 CN 202211123141
(71) Applicant: Huawei Technologies Co., Ltd., Shenzhen, Guangdong 518129 (CN)
(72) Inventor: LI, Chenwan, Shenzhen, Guangdong 518129 (CN)
(74) Representative: Epping - Hermann - Fischer
(86) International application number: PCT/CN2023/118237
(87) International publication number: WO 2024/055961

(57) **Abstract**

A communication method and apparatus are provided, and relate to the field of communication technologies, to trigger a terminal device with a low complexity capability to activate a power saving mode, and reduce signaling overheads in a power saving configuration process. The method may include: A terminal device receives first information from a network device, and activates a power saving mode. The first information is broadcast information, multicast information, or a paging message; and the first information includes power saving duration information indicating power saving duration, and duration for which the terminal device is in the power saving mode is less than or equal to the power saving duration.

## Description

This application claims priority to Chinese Patent Application No. 202211123141.3, filed with the China National Intellectual Property Administration on September 15, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, a terminal device may send a timer configuration request to a core network in a registration procedure or a tracking area update (tracking area update, TAU) procedure, to obtain an active (active) timer configuration and a periodic TAU request timer configuration.

When releasing a radio resource control (radio resource control, RRC) connection to a network device, the terminal device may start an active timer. During running of the active timer, the terminal device may normally receive a paging message sent by the network device, or may perform radio resource management (radio resource measurement, RRM) measurement or the like.

When the active timer expires, the terminal device may start a periodic TAU request timer, and activates a power saving mode (power saving mode, PSM). The periodic TAU request timer may be used to define time at which the terminal device activates the power saving mode. In the power saving mode, the terminal device does not receive any network paging. For a network side, the terminal device is unreachable in this case, and none of data, short messages, and calls can be received. That is, the terminal device is in a sleep mode, and is almost powered off. This can greatly save power.

The foregoing power saving process is actively triggered by the terminal device. However, a terminal device with a low complexity capability may not be able to actively trigger the power saving process, and further may not be able to activate the power saving mode. In addition, the foregoing power saving configuration process is a one-to-one configuration process, resulting in high signaling overheads.

### SUMMARY

Embodiments of this application provide a communication method and apparatus, to trigger a terminal device with a low complexity capability to activate a power saving mode, and reduce signaling overheads in a power saving configuration process.

According to a first aspect, an embodiment of this application provides a communication method. The method may include: A terminal device receives first information from a network device, and activates a power saving mode. The first information is broadcast information, multicast information, or a paging message; and the first information includes power saving duration information indicating power saving duration, and duration for which the terminal device is in the power saving mode is less than or equal to the power saving duration.

Based on the first aspect, a network side actively triggers a power saving configuration procedure for the terminal device by delivering the first information, so that the terminal device with a low complexity capability can activate the power saving mode, thereby reducing power consumption. In addition, because the first information is the broadcast information, the multicast information, or the paging message, that is, the network side may simultaneously configure the power saving duration information for one or more terminal devices, signaling overheads in a power saving configuration process can be reduced.

In a possible design, the terminal device in the power saving mode skips receiving downlink data; or the terminal device in the power saving mode neither receives downlink data nor sends uplink data.

Based on this possible design, when being in the power saving mode, the terminal device skips receiving the downlink data or even skips sending the uplink data, so that power consumption caused by receiving the data or sending the data can be greatly reduced.

In a possible design, the first information further includes one or more of the following: identification information of the terminal device, identification information of a terminal device group associated with the terminal device, or first indication information. The first indication information indicates that the power saving duration information is used for a terminal device supporting the power saving mode.

Based on this possible design, the network side may include the identification information of the terminal device in the first information, to indicate to configure the power saving duration for the terminal device; may include the identification information of the terminal device group in the first information, to indicate to configure the power saving duration for the terminal device associated with the terminal device group; or may include the first indication information in the first information, to indicate to configure the power saving duration for the terminal device supporting the power saving mode.

In a possible design, the terminal device sends second indication information to a core network device before activating the power saving mode, where the second indication information indicates that the terminal device receives the power saving duration information.

Based on this possible design, the terminal device may notify, by sending the second indication information to the core network device, the core network device that the terminal device receives a power saving configuration.

In a possible design, the terminal device activates the power saving mode based on the first information; the terminal device receives third indication information from the network device, and activates the power saving mode based on the third indication information; or the terminal device activates the power saving mode when determining that data transmission is completed. The first information indicates the terminal device to activate the power saving mode; and the third indication information indicates the terminal device to activate the power saving mode.

Based on this possible design, the terminal device may activate the power saving mode when receiving the first information, to quickly reduce power consumption. Alternatively, the terminal device may activate the power saving mode when receiving the third indication information or determining that the data transmission is completed, to ensure that power consumption is reduced after the normal data transmission is completed.

In a possible design, the first information further includes a security parameter. Before activating the power saving mode, the terminal device determines, based on the security parameter, that the first information is valid. The security parameter includes one or more of the following: a random number, a message authentication code for integrity MAC-I, a key index, a group key index, or an encryption algorithm.

Based on this possible design, the first information further includes the security parameter. When determining, based on the security parameter, that the first information is valid, the terminal device may determine the power saving duration in the power saving mode based on the first information.

In a possible design, the first information further includes configuration information of a first timer, and the terminal device activates the power saving mode when the first timer expires. The configuration information of the first timer indicates the first timer.

Based on this possible design, the terminal device may further activate the power saving mode when the first timer expires. During running of the first timer, the terminal device may normally send the uplink data, or receive the downlink data or a downlink signal from the network device.

In a possible design, after activating the power saving mode, the terminal device periodically enters a wake-up state within the power saving duration, or enters the wake-up state when the duration for which the power saving mode is activated is greater than or equal to a first threshold; receives clock information from the network device; and performs clock synchronization based on the clock information.

In a possible design, the clock information is carried in one or more of the following signaling: a random access response, a superframe, a frame, or a beacon frame.

Based on the foregoing two possible designs, when power saving time of the terminal device is long, the terminal device may receive the clock information from the network device in time, to implement clock alignment between the terminal device and the network side, and ensure that a clock offset is within an acceptable range. In addition, it can also be ensured that the network side can page the terminal device when the terminal device is not in a sleep state, to implement normal communication of the terminal device.

According to a second aspect, an embodiment of this application provides a communication method. The method may include: A network device receives first information from a core network device, and sends the first information. The first information is broadcast information, multicast information, or a paging message; and the first information includes power saving duration information indicating power saving duration.

Based on the second aspect, a network side may actively trigger a power saving configuration procedure for a terminal device by delivering the first information, so that the terminal device with a low complexity capability can activate a power saving mode, thereby reducing power consumption. In addition, because the first information is the broadcast information, the multicast information, or the paging message, that is, the network side may simultaneously configure the power saving duration information for one or more terminal devices, signaling overheads in a power saving configuration process can be reduced.

In a possible design, the first information further includes one or more of the following: identification information of the terminal device, identification information of a terminal device group associated with the terminal device, or first indication information. The first indication information indicates that the power saving duration information is used for a terminal device supporting the power saving mode.

Based on this possible design, the network side may include the identification information of the terminal device in the first information, to indicate to configure the power saving duration for the terminal device; may include the identification information of the terminal device group in the first information, to indicate to configure the power saving duration for the terminal device associated with the terminal device group; or may include the first indication information in the first information, to indicate to configure the power saving duration for the terminal device supporting the power saving mode.

In a possible design, the first information further includes a security parameter, and the security parameter includes one or more of the following: a random number, a message authentication code for integrity MAC-I, a key index, or a group key index.

Based on this possible design, the first information further includes the security parameter. When determining, based on the security parameter, that the first information is valid, the terminal device may determine the power saving duration in the power saving mode based on the first information.

In a possible design, the network device sends third indication information to the terminal device, where the third indication information indicates the terminal device to activate the power saving mode.

In a possible design, the first information further includes configuration information of a first timer, the configuration information of the first timer indicates the first timer, and the first timer is used by the terminal device to activate the power saving mode when the first timer expires.

Based on this possible design, the terminal device may further activate the power saving mode when the first timer expires. During running of the first timer, the terminal device may normally send uplink data, or receive downlink data or a downlink signal from the network device.

In a possible design, the network device sends clock information to the terminal device. The clock information is used by the terminal device to perform clock synchronization.

In a possible design, the clock information is carried in one or more of the following signaling: a random access response, a superframe, a frame, or a beacon frame.

Based on the foregoing two possible designs, when power saving time of the terminal device is long, the terminal device may receive the clock information from the network device in time, to implement clock alignment between the terminal device and the network side, and ensure that a clock offset is within an acceptable range. In addition, it can also be ensured that the network side can page the terminal device when the terminal device is not in a sleep state, to implement normal communication of the terminal device.

According to a third aspect, an embodiment of this application provides a communication method. The method may include: A core network device determines first information, and sends the first information. The first information is broadcast information, multicast information, or a paging message; and the first information includes power saving duration information indicating power saving duration.

Based on the third aspect, the core network device may actively trigger a power saving configuration procedure for a terminal device by delivering the first information, so that the terminal device with a low complexity capability can activate a power saving mode, thereby reducing power consumption. In addition, because the first information is the broadcast information, the multicast information, or the paging message, that is, a network side may simultaneously configure the power saving duration information for one or more terminal devices, signaling overheads in a power saving configuration process can be reduced.

In a possible design, the core network device receives second indication information from the terminal device, where the second indication information indicates that the terminal device receives the power saving duration information.

Based on this possible design, the terminal device may notify, by sending the second indication information to the core network device, the core network device that the terminal device receives a power saving configuration.

In a possible design, the first information further includes one or more of the following: identification information of the terminal device, identification information of a terminal device group associated with the terminal device, or first indication information. The first indication information indicates that the power saving duration information is used for a terminal device supporting the power saving mode.

Based on this possible design, the core network device may include the identification information of the terminal device in the first information, to indicate to configure the power saving duration for the terminal device; may include the identification information of the terminal device group in the first information, to indicate to configure the power saving duration for the terminal device associated with the terminal device group; or may include the first indication information in the first information, to indicate to configure the power saving duration for the terminal device supporting the power saving mode.

In a possible design, the first information further includes a security parameter, and the security parameter includes one or more of the following: a random number, a message authentication code for integrity MAC-I, a key index, or a group key index.

Based on this possible design, the first information further includes the security parameter. When determining, based on the security parameter, that the first information is valid, the terminal device may determine the power saving duration in the power saving mode based on the first information.

In a possible design, the first information further includes configuration information of a first timer, the configuration information of the first timer indicates the first timer, and the first timer is used by the terminal device to activate the power saving mode when the first timer expires.

Based on this possible design, the terminal device may further activate the power saving mode when the first timer expires. During running of the first timer, the terminal device may normally send uplink data, or receive downlink data or a downlink signal from a network device.

According to a fourth aspect, an embodiment of this application provides a communication method. The method may include: A terminal device receives third information from a network device, where the third information indicates the terminal device supporting a power saving mode to report capability information, and the third information is broadcast information, multicast information, or a paging message. The terminal device reports the capability information to the network device, where the capability information indicates that the terminal device supports the power saving mode.

Based on the fourth aspect, a network side may actively trigger a power saving configuration negotiation procedure with the terminal device by delivering the third information. Because the third information is the broadcast information, the multicast information, or the paging message, that is, the network side may simultaneously trigger the power saving configuration negotiation procedure with one or more terminal devices, signaling overheads in the power saving configuration negotiation process can be reduced.

In a possible design, the third information further includes one or more of the following: identification information of the terminal device or identification information of a terminal device group associated with the terminal device.

Based on this possible design, the network side may include the identification information of the terminal device in the third information, to indicate to negotiate a power saving configuration with the terminal device; or may include the identification information of the terminal device group in the third information, to indicate to negotiate a power saving configuration with the terminal device associated with the terminal device group.

In a possible design, the terminal device receives power saving duration information from a core network device. The terminal device activates the power saving mode. The power saving duration information indicates power saving duration, and duration for which the terminal device is in the power saving mode is less than or equal to the power saving duration.

Based on this possible design, when determining, based on the capability information reported by the terminal device, that the terminal device supports the power saving mode, the network side may send the power saving duration information to the terminal device, so that the terminal device with a low complexity capability can activate the power saving mode, thereby reducing power consumption.

In a possible design, the terminal device in the power saving mode skips receiving downlink data; or the terminal device in the power saving mode neither receives downlink data nor sends uplink data.

Based on this possible design, when being in the power saving mode, the terminal device skips receiving the downlink data or even skips sending the uplink data, so that power consumption caused by receiving the data or sending the data can be greatly reduced.

In a possible design, before receiving the power saving duration information from the core network device, the terminal device sends fourth indication information to the core network device, where the fourth indication information indicates that the terminal device receives the power saving configuration.

Based on this possible design, the terminal device may send the fourth indication information to the core network device, so that the core network device performs the power saving configuration on the terminal device that can receive the power saving configuration.

In a possible design, after receiving the power saving duration information from the core network device, the terminal device sends second indication information to the core network device, where the second indication information indicates that the terminal device receives the power saving duration information.

Based on this possible design, the terminal device may notify, by sending the second indication information to the core network device, the core network device that the terminal device receives the power saving configuration.

In a possible design, the second indication information includes first duration information, the first duration information indicates first duration, and the first duration is duration for which the terminal device expects to activate the power saving mode.

Based on this possible design, the terminal device may also notify the core network device of the duration for which the terminal device expects to activate the power saving mode, so that the core network device performs the power saving configuration for the terminal device based on the duration expected by the terminal device.

In a possible design, the terminal device activates the power saving mode based on the power saving duration information, where the power saving duration information indicates the terminal device to activate the power saving mode. Alternatively, the terminal device receives third indication information from the network device, and activates the power saving mode based on the third indication information, where the third indication information indicates the terminal device to activate the power saving mode. Alternatively, the terminal device activates the power saving mode when determining that data transmission is completed.

Based on this possible design, the terminal device may activate the power saving mode when receiving the power saving duration information, to quickly reduce power consumption. Alternatively, the terminal device may activate the power saving mode when receiving the third indication information or determining that the data transmission is completed, to ensure that power consumption is reduced after the normal data transmission is completed.

In a possible design, the power saving duration information further includes configuration information of a first timer, and the configuration information of the first timer indicates the first timer. The terminal device activates the power saving mode when the first timer expires.

Based on this possible design, the terminal device may further activate the power saving mode when the first timer expires. During running of the first timer, the terminal device may normally send the uplink data, or receive the downlink data or a downlink signal from the network device.

In a possible design, after activating the power saving mode, the terminal device periodically enters a wake-up state within the power saving duration, or enters the wake-up state when the duration for which the power saving mode is activated is greater than or equal to a first threshold; receives clock information from the network device; and performs clock synchronization based on the clock information.

In a possible design, the clock information is carried in one or more of the following signaling: a random access response, a superframe, a frame, or a beacon frame.

Based on the foregoing two possible designs, when power saving time of the terminal device is long, the terminal device may receive the clock information from the network device in time, to implement clock alignment between the terminal device and the network side, and ensure that a clock offset is within an acceptable range. In addition, it can also be ensured that the network side can page the terminal device when the terminal device is not in a sleep state, to implement normal communication of the terminal device.

According to a fifth aspect, an embodiment of this application provides a communication method. The method may include: A network device receives second information from a core network device, and sends third information, where the second information indicates a terminal device supporting a power saving mode to report capability information, the second information is broadcast information, multicast information, or a paging message, and the third information includes a part or all of content of the second information. The network device receives the capability information from the terminal device, and sends the capability information of the terminal device to the core network device, where the capability information indicates that the terminal device supports the power saving mode.

Based on the fifth aspect, a network side may actively trigger a power saving configuration negotiation procedure with the terminal device by delivering the second information. Because the second information is the broadcast information, the multicast information, or the paging message, that is, the network side may simultaneously trigger the power saving configuration negotiation procedure with one or more terminal devices, signaling overheads in the power saving configuration negotiation process can be reduced.

In a possible design, the second information further includes one or more of the following: identification information of the terminal device or identification information of a terminal device group associated with the terminal device.

Based on this possible design, the network side may include the identification information of the terminal device in the second information, to indicate to negotiate a power saving configuration with the terminal device; or may include the identification information of the terminal device group in the second information, to indicate to negotiate a power saving configuration with the terminal device associated with the terminal device group.

In a possible design, the network device sends third indication information to the terminal device, where the third indication information indicates the terminal device to activate the power saving mode.

In a possible design, the network device sends clock information to the terminal device. The clock information is used by the terminal device to perform clock synchronization.

In a possible design, the clock information is carried in one or more of the following signaling: a random access response, a superframe, a frame, or a beacon frame.

Based on the foregoing two possible designs, when power saving time of the terminal device is long, the terminal device may receive the clock information from the network device in time, to implement clock alignment between the terminal device and the network side, and ensure that a clock offset is within an acceptable range. In addition, it can also be ensured that the network side can page the terminal device when the terminal device is not in a sleep state, to implement normal communication of the terminal device.

According to a sixth aspect, an embodiment of this application provides a communication method. The method may include: A core network device sends second information, where the second information indicates a terminal device supporting a power saving mode to report capability information, and the second information is broadcast information, multicast information, or a paging message. The core network device receives the capability information of the terminal device from a network device, where the capability information indicates that the terminal device supports the power saving mode.

Based on the sixth aspect, the core network device may actively trigger a power saving configuration negotiation procedure with the terminal device by delivering the second information. Because the second information is the broadcast information, the multicast information, or the paging message, that is, the core network device may simultaneously trigger the power saving configuration negotiation procedure with one or more terminal devices, signaling overheads in the power saving configuration negotiation process can be reduced.

In a possible design, the second information further includes one or more of the following: identification information of the terminal device or identification information of a terminal device group associated with the terminal device.

Based on this possible design, the core network device may include the identification information of the terminal device in the second information, to indicate to negotiate a power saving configuration with the terminal device; or may include the identification information of the terminal device group in the second information, to indicate to negotiate a power saving configuration with the terminal device associated with the terminal device group.

In a possible design, the core network device sends power saving duration information to the terminal device. The power saving duration information indicates power saving duration.

Based on this possible design, when determining, based on the capability information reported by the terminal device, that the terminal device supports the power saving mode, the network side may send the power saving duration information to the terminal device, so that the terminal device with a low complexity capability can activate the power saving mode, thereby reducing power consumption.

In a possible design, before sending the power saving duration information to the terminal device, the core network device receives fourth indication information from the terminal device, where the fourth indication information indicates that the terminal device receives a power saving configuration.

Based on this possible design, the terminal device may send the fourth indication information to the core network device, so that the core network device performs the power saving configuration on the terminal device that can receive the power saving configuration.

In a possible design, after sending the power saving duration information to the terminal device, the core network device receives second indication information from the terminal device, where the second indication information indicates that the terminal device receives the power saving duration information.

Based on this possible design, the terminal device may notify, by sending the second indication information to the core network device, the core network device that the terminal device receives the power saving configuration.

In a possible design, the second indication information includes first duration information, the first duration information indicates first duration, and the first duration is duration for which the terminal device expects to activate the power saving mode.

Based on this possible design, the terminal device may also notify the core network device of the duration for which the terminal device expects to activate the power saving mode, so that the core network device performs the power saving configuration for the terminal device based on the duration expected by the terminal device.

In a possible design, the power saving duration information further includes configuration information of a first timer, the configuration information of the first timer indicates the first timer, and the first timer is used by the terminal device to activate the power saving mode when the first timer expires.

Based on this possible design, the terminal device may further activate the power saving mode when the first timer expires. During running of the first timer, the terminal device may normally send uplink data, or receive downlink data or a downlink signal from the network device.

According to a seventh aspect, an embodiment of this application provides a communication method. The method may include: A terminal device receives fifth information from a network device, where the fifth information indicates that a core network device supports a configuration of a power saving mode, and the fifth information is broadcast information, multicast information, or a paging message. The terminal device sends a configuration request to the network device, where the configuration request is for requesting to configure the power saving mode.

Based on the seventh aspect, a network side may actively trigger a power saving configuration negotiation procedure with the terminal device by delivering the fifth information. Because the fifth information is the broadcast information, the multicast information, or the paging message, that is, the network side may simultaneously trigger the power saving configuration negotiation procedure with one or more terminal devices, signaling overheads in the power saving configuration negotiation process can be reduced.

In a possible design, the fifth information further includes one or more of the following: identification information of the terminal device or identification information of a terminal device group associated with the terminal device.

Based on this possible design, the network side may include the identification information of the terminal device in the fifth information, to indicate to negotiate a power saving configuration with the terminal device; or may include the identification information of the terminal device group in the fifth information, to indicate to negotiate a power saving configuration with the terminal device associated with the terminal device group.

In a possible design, the configuration request includes first duration information, the first duration information indicates first duration, and the first duration is duration that is in the power saving mode and that is expected by the terminal device.

Based on this possible design, the terminal device may also notify the core network device of the duration for which the terminal device expects to activate the power saving mode, so that the core network device performs the power saving configuration for the terminal device based on the duration expected by the terminal device.

In a possible design, the terminal device receives power saving duration information from the core network device, where the power saving duration information indicates power saving duration. The terminal device activates the power saving mode, where duration for which the terminal device is in the power saving mode is less than or equal to the power saving duration.

Based on this possible design, when determining, based on the configuration request from the terminal device, that the terminal device needs to perform the power saving configuration, the network side may send the power saving duration information to the terminal device, so that the terminal device with a low complexity capability can activate the power saving mode, thereby reducing power consumption.

In a possible design, the terminal device in the power saving mode skips receiving downlink data; or the terminal device in the power saving mode neither receives downlink data nor sends uplink data.

Based on this possible design, when being in the power saving mode, the terminal device skips receiving the downlink data or even skips sending the uplink data, so that power consumption caused by receiving the data or sending the data can be greatly reduced.

In a possible design, before that the terminal device receives power saving duration information from the core network device, the method further includes: The terminal device sends fourth indication information to the core network device, where the fourth indication information indicates that the terminal device receives the power saving configuration.

Based on this possible design, the terminal device may send the fourth indication information to the core network device, so that the core network device performs the power saving configuration on the terminal device that can receive the power saving configuration.

In a possible design, after that the terminal device receives power saving duration information from the core network device, the method further includes: The terminal device sends second indication information to the core network device, where the second indication information indicates that the terminal device receives the power saving duration information.

Based on this possible design, the terminal device may notify, by sending the second indication information to the core network device, the core network device that the terminal device receives the power saving configuration.

In a possible design, the second indication information includes first duration information, the first duration information indicates first duration, and the first duration is duration for which the terminal device expects to activate the power saving mode.

Based on this possible design, the terminal device may also notify the core network device of the duration for which the terminal device expects to activate the power saving mode, so that the core network device performs the power saving configuration for the terminal device based on the duration expected by the terminal device.

In a possible design, the terminal device activates the power saving mode based on the power saving duration information, where the power saving duration information indicates the terminal device to activate the power saving mode. Alternatively, the terminal device receives third indication information from the network device, and activates the power saving mode based on the third indication information, where the third indication information indicates the terminal device to activate the power saving mode. Alternatively, the terminal device activates the power saving mode when determining that data transmission is completed.

Based on this possible design, the terminal device may activate the power saving mode when receiving the power saving duration information, to quickly reduce power consumption. Alternatively, the terminal device may activate the power saving mode when receiving the third indication information or determining that the data transmission is completed, to ensure that power consumption is reduced after the normal data transmission is completed.

In a possible design, the power saving duration information further includes configuration information of a first timer, and the configuration information of the first timer indicates the first timer. The terminal device activates the power saving mode when the first timer expires.

Based on this possible design, the terminal device may further activate the power saving mode when the first timer expires. During running of the first timer, the terminal device may normally send the uplink data, or receive the downlink data or a downlink signal from the network device.

In a possible design, after activating the power saving mode, the terminal device periodically enters a wake-up state within the power saving duration, or enters the wake-up state when the duration for which the power saving mode is activated is greater than or equal to a first threshold; receives clock information from the network device; and performs clock synchronization based on the clock information.

In a possible design, the clock information is carried in one or more of the following signaling: a random access response, a superframe, a frame, or a beacon frame.

Based on the foregoing two possible designs, when power saving time of the terminal device is long, the terminal device may receive the clock information from the network device in time, to implement clock alignment between the terminal device and the network side, and ensure that a clock offset is within an acceptable range. In addition, it can also be ensured that the network side can page the terminal device when the terminal device is not in a sleep state, to implement normal communication of the terminal device.

According to an eighth aspect, an embodiment of this application provides a communication method. The method may include: A network device receives fourth information from a core network device, where the fourth information indicates that the core network device supports a configuration of a power saving mode, and the fourth information is broadcast information, multicast information, or a paging message. The network device sends fifth information, where the fifth information includes a part or all of content of the fourth information. The network device receives a configuration request from a terminal device, where the configuration request is for requesting to configure the power saving mode. The network device sends the configuration request to the core network device.

Based on the eighth aspect, a network side may actively trigger a power saving configuration negotiation procedure with the terminal device by delivering the fourth information. Because the fourth information is the broadcast information, the multicast information, or the paging message, that is, the network side may simultaneously trigger the power saving configuration negotiation procedure with one or more terminal devices, signaling overheads in the power saving configuration negotiation process can be reduced.

In a possible design, the fourth information further includes one or more of the following: identification information of the terminal device or identification information of a terminal device group associated with the terminal device.

Based on this possible design, the network side may include the identification information of the terminal device in the fourth information, to indicate to negotiate a power saving configuration with the terminal device; or may include the identification information of the terminal device group in the fourth information, to indicate to negotiate a power saving configuration with the terminal device associated with the terminal device group.

In a possible design, the configuration request includes first duration information, the first duration information indicates first duration, and the first duration is duration that is in the power saving mode and that is expected by the terminal device.

Based on this possible design, the terminal device may also notify the core network device of the duration for which the terminal device expects to activate the power saving mode, so that the core network device performs the power saving configuration for the terminal device based on the duration expected by the terminal device.

In a possible design, the network device sends third indication information to the terminal device, where the third indication information indicates the terminal device to activate the power saving mode.

In a possible design, the network device sends clock information to the terminal device. The clock information is used by the terminal device to perform clock synchronization.

In a possible design, the clock information is carried in one or more of the following signaling: a random access response, a superframe, a frame, or a beacon frame.

Based on the foregoing two possible designs, when power saving time of the terminal device is long, the terminal device may receive the clock information from the network device in time, to implement clock alignment between the terminal device and the network side, and ensure that a clock offset is within an acceptable range. In addition, it can also be ensured that the network side can page the terminal device when the terminal device is not in a sleep state, to implement normal communication of the terminal device.

According to a ninth aspect, an embodiment of this application provides a communication method. The method may include: A core network device sends fourth information, where the fourth information indicates that the core network device supports a configuration of a power saving mode, and the fourth information is broadcast information, multicast information, or a paging message. The core network device receives a configuration request from a terminal device via a network device, where the configuration request is for requesting to configure the power saving mode.

Based on the ninth aspect, the core network device may actively trigger a power saving configuration negotiation procedure with the terminal device by delivering the fourth information. Because the fourth information is the broadcast information, the multicast information, or the paging message, that is, the core network device may simultaneously trigger the power saving configuration negotiation procedure with one or more terminal devices, signaling overheads in the power saving configuration negotiation process can be reduced.

In a possible design, the fourth information further includes one or more of the following: identification information of the terminal device or identification information of a terminal device group associated with the terminal device.

Based on this possible design, a network side may include the identification information of the terminal device in the fourth information, to indicate to negotiate a power saving configuration with the terminal device; or may include the identification information of the terminal device group in the fourth information, to indicate to negotiate a power saving configuration with the terminal device associated with the terminal device group.

In a possible design, the configuration request includes first duration information, the first duration information indicates first duration, and the first duration is duration that is in the power saving mode and that is expected by the terminal device.

Based on this possible design, the terminal device may also notify the core network device of the duration for which the terminal device expects to activate the power saving mode, so that the core network device performs the power saving configuration for the terminal device based on the duration expected by the terminal device.

In a possible design, the core network device sends power saving duration information to the terminal device, where the power saving duration information indicates power saving duration.

Based on this possible design, when determining, based on the configuration request from the terminal device, that the terminal device needs to perform the power saving configuration, the network side may send the power saving duration information to the terminal device, so that the terminal device with a low complexity capability can activate the power saving mode, thereby reducing power consumption.

In a possible design, before sending the power saving duration information to the terminal device, the core network device receives fourth indication information from the terminal device, where the fourth indication information indicates that the terminal device receives a power saving configuration.

Based on this possible design, the terminal device may send the fourth indication information to the core network device, so that the core network device performs the power saving configuration on the terminal device that can receive the power saving configuration.

In a possible design, after sending the power saving duration information to the terminal device, the core network device further receives second indication information from the terminal device, where the second indication information indicates that the terminal device receives the power saving duration information.

Based on this possible design, the terminal device may notify, by sending the second indication information to the core network device, the core network device that the terminal device receives the power saving configuration.

In a possible design, the second indication information includes first duration information, the first duration information indicates first duration, and the first duration is duration for which the terminal device expects to activate the power saving mode.

Based on this possible design, the terminal device may also notify the core network device of the duration for which the terminal device expects to activate the power saving mode, so that the core network device performs the power saving configuration for the terminal device based on the duration expected by the terminal device.

In a possible design, the power saving duration information further includes configuration information of a first timer, the configuration information of the first timer indicates the first timer, and the first timer is used by the terminal device to activate the power saving mode when the first timer expires.

Based on this possible design, the terminal device may further activate the power saving mode when the first timer expires. During running of the first timer, the terminal device may normally send uplink data, or receive downlink data or a downlink signal from the network device.

According to a tenth aspect, an embodiment of this application provides a communication apparatus. The communication apparatus may be used in the terminal device in the first aspect or the possible designs of the first aspect, to implement a function performed by the terminal device. The communication apparatus may be the terminal device, or may be a chip, a system-on-chip, or the like of the terminal device. The communication apparatus may perform, by hardware or by hardware executing corresponding software, the function performed by the terminal device. The hardware or the software includes one or more modules corresponding to the foregoing function, for example, a transceiver module and a processing module. The transceiver module is configured to receive first information from a network device. The processing module is configured to activate the power saving mode. The first information is broadcast information, multicast information, or a paging message; and the first information includes power saving duration information indicating power saving duration, and duration for which the terminal device is in the power saving mode is less than or equal to the power saving duration.

In a possible design, the terminal device in the power saving mode skips receiving downlink data; or the terminal device in the power saving mode neither receives downlink data nor sends uplink data.

In a possible design, the first information further includes one or more of the following: identification information of the terminal device, identification information of a terminal device group associated with the terminal device, or first indication information. The first indication information indicates that the power saving duration information is used for a terminal device supporting the power saving mode.

In a possible design, the transceiver module is further configured to send second indication information to a core network device before the processing module activates the power saving mode, where the second indication information indicates that the terminal device receives the power saving duration information.

In a possible design, the processing module activates the power saving mode based on the first information; the transceiver module receives third indication information from the network device, and the processing module activates the power saving mode based on the third indication information; or the processing module activates the power saving mode when determining that data transmission is completed. The first information indicates the terminal device to activate the power saving mode; and the third indication information indicates the terminal device to activate the power saving mode.

In a possible design, the first information further includes a security parameter. Before activating the power saving mode, the processing module determines, based on the security parameter, that the first information is valid. The security parameter includes one or more of the following: a random number, a message authentication code for integrity MAC-I, a key index, a group key index, or an encryption algorithm.

In a possible design, the first information further includes configuration information of a first timer, and the processing module activates the power saving mode when the first timer expires. The configuration information of the first timer indicates the first timer.

In a possible design, after activating the power saving mode, the processing module periodically enters a wake-up state within the power saving duration, or enters the wake-up state when the duration for which the power saving mode is activated is greater than or equal to a first threshold. The transceiver module receives clock information from the network device. The processing module performs clock synchronization based on the clock information.

In a possible design, the clock information is carried in one or more of the following signaling: a random access response, a superframe, a frame, or a beacon frame.

It should be noted that the modules in the tenth aspect or the possible designs of the tenth aspect can perform the corresponding functions in the method examples in the first aspect. For details, refer to detailed descriptions in the method examples. For beneficial effects, refer to related descriptions in the first aspect. Details are not described herein again.

According to an eleventh aspect, an embodiment of this application provides a communication apparatus. The communication apparatus may be used in the network device in the second aspect or the possible designs of the second aspect, to implement a function performed by the network device. The communication apparatus may be the network device, or may be a chip, a system-on-chip, or the like of the network device. The communication apparatus may perform, by hardware or by hardware executing corresponding software, the function performed by the network device. The hardware or the software includes one or more modules corresponding to the foregoing function, for example, a transceiver module. The transceiver module is configured to: receive first information from a core network device, and send the first information. The first information is broadcast information, multicast information, or a paging message; and the first information includes power saving duration information indicating power saving duration.

In a possible design, the first information further includes one or more of the following: identification information of a terminal device, identification information of a terminal device group associated with the terminal device, or first indication information. The first indication information indicates that the power saving duration information is used for a terminal device supporting a power saving mode.

In a possible design, the first information further includes a security parameter, and the security parameter includes one or more of the following: a random number, a message authentication code for integrity MAC-I, a key index, or a group key index.

In a possible design, the transceiver module is further configured to send third indication information to the terminal device, where the third indication information indicates the terminal device to activate the power saving mode.

In a possible design, the first information further includes configuration information of a first timer, the configuration information of the first timer indicates the first timer, and the first timer is used by the terminal device to activate the power saving mode when the first timer expires.

In a possible design, the transceiver module is further configured to send clock information to the terminal device. The clock information is used by the terminal device to perform clock synchronization.

In a possible design, the clock information is carried in one or more of the following signaling: a random access response, a superframe, a frame, or a beacon frame.

It should be noted that the modules in the eleventh aspect or the possible designs of the eleventh aspect can perform the corresponding functions in the method examples in the second aspect. For details, refer to detailed descriptions in the method examples. For beneficial effects, refer to related descriptions in the second aspect. Details are not described herein again.

According to a twelfth aspect, an embodiment of this application provides a communication apparatus. The communication apparatus may be used in the core network device in the third aspect or the possible designs of the third aspect, to implement a function performed by the core network device. The communication apparatus may be the core network device, or may be a chip, a system-on-chip, or the like of the core network device. The communication apparatus may perform, by hardware or by hardware executing corresponding software, the function performed by a network device. The hardware or the software includes one or more modules corresponding to the foregoing function, for example, a transceiver module and a processing module. The processing module is configured to determine first information. The transceiver module is configured to send the first information. The first information is broadcast information, multicast information, or a paging message; and the first information includes power saving duration information indicating power saving duration.

In a possible design, the transceiver module is further configured to receive second indication information from a terminal device, where the second indication information indicates that the terminal device receives the power saving duration information.

In a possible design, the first information further includes one or more of the following: identification information of the terminal device, identification information of a terminal device group associated with the terminal device, or first indication information. The first indication information indicates that the power saving duration information is used for a terminal device supporting a power saving mode.

In a possible design, the first information further includes a security parameter, and the security parameter includes one or more of the following: a random number, a message authentication code for integrity MAC-I, a key index, or a group key index.

In a possible design, the first information further includes configuration information of a first timer, the configuration information of the first timer indicates the first timer, and the first timer is used by the terminal device to activate the power saving mode when the first timer expires.

It should be noted that the modules in the twelfth aspect or the possible designs of the twelfth aspect can perform the corresponding functions in the method examples in the third aspect. For details, refer to detailed descriptions in the method examples. For beneficial effects, refer to related descriptions in the third aspect. Details are not described herein again.

According to a thirteenth aspect, an embodiment of this application provides a communication apparatus. The communication apparatus may be used in the terminal device in the fourth aspect or the possible designs of the fourth aspect, to implement a function performed by the terminal device. The communication apparatus may be the terminal device, or may be a chip, a system-on-chip, or the like of the terminal device. The communication apparatus may perform, by hardware or by hardware executing corresponding software, the function performed by the terminal device. The hardware or the software includes one or more modules corresponding to the foregoing function, for example, a transceiver module and a processing module. The transceiver module is configured to receive third information from a network device, where the third information indicates the terminal device supporting a power saving mode to report capability information, and second information is broadcast information, multicast information, or a paging message. The transceiver module is further configured to report the capability information to the network device, where the capability information indicates that the terminal device supports the power saving mode.

In a possible design, the third information further includes one or more of the following: identification information of the terminal device or identification information of a terminal device group associated with the terminal device.

In a possible design, the transceiver module is further configured to receive power saving duration information from a core network device. The processing module activates the power saving mode. The power saving duration information indicates power saving duration, and duration for which the terminal device is in the power saving mode is less than or equal to the power saving duration.

In a possible design, the terminal device in the power saving mode skips receiving downlink data; or the terminal device in the power saving mode neither receives downlink data nor sends uplink data.

In a possible design, before receiving the power saving duration information from the core network device, the transceiver module sends fourth indication information to the core network device, where the fourth indication information indicates that the terminal device receives the power saving configuration.

In a possible design, after receiving the power saving duration information from the core network device, the transceiver module sends second indication information to the core network device, where the second indication information indicates that the terminal device receives the power saving duration information.

In a possible design, the second indication information includes first duration information, the first duration information indicates first duration, and the first duration is duration for which the terminal device expects to activate the power saving mode.

In a possible design, the processing module activates the power saving mode based on the power saving duration information, where the power saving duration information indicates the terminal device to activate the power saving mode. Alternatively, the transceiver module receives third indication information from the network device, and the processing module activates the power saving mode based on the third indication information, where the third indication information indicates the terminal device to activate the power saving mode. Alternatively, the processing module activates the power saving mode when determining that data transmission is completed.

In a possible design, the power saving duration information further includes configuration information of a first timer, and the configuration information of the first timer indicates the first timer. The processing module activates the power saving mode when the first timer expires.

In a possible design, after activating the power saving mode, the processing module periodically enters a wake-up state within the power saving duration, or enters the wake-up state when the duration for which the power saving mode is activated is greater than or equal to a first threshold. The transceiver module receives clock information from the network device. The processing module performs clock synchronization based on the clock information.

In a possible design, the clock information is carried in one or more of the following signaling: a random access response, a superframe, a frame, or a beacon frame.

It should be noted that the modules in the thirteenth aspect or the possible designs of the thirteenth aspect can perform the corresponding functions in the method examples in the fourth aspect. For details, refer to detailed descriptions in the method examples. For beneficial effects, refer to related descriptions in the fourth aspect. Details are not described herein again.

According to a fourteenth aspect, an embodiment of this application provides a communication apparatus. The communication apparatus may be used in the network device in the fifth aspect or the possible designs of the fifth aspect, to implement a function performed by the network device. The communication apparatus may be the network device, or may be a chip, a system-on-chip, or the like of the network device. The communication apparatus may perform, by hardware or by hardware executing corresponding software, the function performed by the network device. The hardware or the software includes one or more modules corresponding to the foregoing function, for example, a transceiver module. The transceiver module is configured to: receive second information from a core network device, and send third information, where the second information indicates a terminal device supporting a power saving mode to report capability information, the second information is broadcast information, multicast information, or a paging message, and the third information includes a part or all of content of the second information. The transceiver module is further configured to: receive the capability information from the terminal device, and send the capability information of the terminal device to the core network device, where the capability information indicates that the terminal device supports the power saving mode.

In a possible design, the second information further includes one or more of the following: identification information of the terminal device or identification information of a terminal device group associated with the terminal device.

In a possible design, the transceiver module is further configured to send third indication information to the terminal device, where the third indication information indicates the terminal device to activate the power saving mode.

In a possible design, the transceiver module is further configured to send clock information to the terminal device. The clock information is used by the terminal device to perform clock synchronization.

In a possible design, the clock information is carried in one or more of the following signaling: a random access response, a superframe, a frame, or a beacon frame.

It should be noted that the modules in the fourteenth aspect or the possible designs of the fourteenth aspect can perform the corresponding functions in the method examples in the fifth aspect. For details, refer to detailed descriptions in the method examples. For beneficial effects, refer to related descriptions in the fifth aspect. Details are not described herein again.

According to a fifteenth aspect, an embodiment of this application provides a communication apparatus. The communication apparatus may be used in the core network device in the sixth aspect or the possible designs of the sixth aspect, to implement a function performed by the core network device. The communication apparatus may be the core network device, or may be a chip, a system-on-chip, or the like of the core network device. The communication apparatus may perform, by hardware or by hardware executing corresponding software, the function performed by a network device. The hardware or the software includes one or more modules corresponding to the foregoing function, for example, a transceiver module and a processing module. The processing module is configured to determine second information. The transceiver module is configured to send the second information, where the second information indicates a terminal device supporting a power saving mode to report capability information, and the second information is broadcast information, multicast information, or a paging message. The transceiver module is further configured to receive the capability information of the terminal device from a network device, where the capability information indicates that the terminal device supports the power saving mode.

In a possible design, the second information further includes one or more of the following: identification information of the terminal device or identification information of a terminal device group associated with the terminal device.

In a possible design, the transceiver module is further configured to send power saving duration information to the terminal device. The power saving duration information indicates power saving duration.

In a possible design, before sending the power saving duration information to the terminal device, the transceiver module receives fourth indication information from the terminal device, where the fourth indication information indicates that the terminal device receives a power saving configuration.

In a possible design, after sending the power saving duration information to the terminal device, the transceiver module receives second indication information from the terminal device, where the second indication information indicates that the terminal device receives the power saving duration information.

In a possible design, the second indication information includes first duration information, the first duration information indicates first duration, and the first duration is duration for which the terminal device expects to activate the power saving mode.

In a possible design, the power saving duration information further includes configuration information of a first timer, the configuration information of the first timer indicates the first timer, and the first timer is used by the terminal device to activate the power saving mode when the first timer expires.

It should be noted that the modules in the fifteenth aspect or the possible designs of the fifteenth aspect can perform the corresponding functions in the method examples in the sixth aspect. For details, refer to detailed descriptions in the method examples. For beneficial effects, refer to related descriptions in the sixth aspect. Details are not described herein again.

According to a sixteenth aspect, an embodiment of this application provides a communication apparatus. The communication apparatus may be used in the terminal device in the seventh aspect or the possible designs of the seventh aspect, to implement a function performed by the terminal device. The communication apparatus may be the terminal device, or may be a chip, a system-on-chip, or the like of the terminal device. The communication apparatus may perform, by hardware or by hardware executing corresponding software, the function performed by the terminal device. The hardware or the software includes one or more modules corresponding to the foregoing function, for example, a transceiver module and a processing module. The transceiver module is configured to receive fifth information from a network device, where the fifth information indicates that a core network device supports a configuration of a power saving mode, and the fifth information is broadcast information, multicast information, or a paging message. The transceiver module is further configured to send a configuration request to the network device, where the configuration request is for requesting to configure the power saving mode.

In a possible design, the fifth information further includes one or more of the following: identification information of the terminal device or identification information of a terminal device group associated with the terminal device.

In a possible design, the configuration request includes first duration information, the first duration information indicates first duration, and the first duration is duration that is in the power saving mode and that is expected by the terminal device.

In a possible design, the transceiver module is further configured to receive power saving duration information from the core network device, where the power saving duration information indicates power saving duration. The processing module is configured to activate the power saving mode, where duration for which the terminal device is in the power saving mode is less than or equal to the power saving duration.

In a possible design, the terminal device in the power saving mode skips receiving downlink data; or the terminal device in the power saving mode neither receives downlink data nor sends uplink data.

In a possible design, before receiving the power saving duration information from the core network device, the transceiver module sends fourth indication information to the core network device, where the fourth indication information indicates that the terminal device receives a power saving configuration.

In a possible design, after receiving the power saving duration information from the core network device, the transceiver module sends second indication information to the core network device, where the second indication information indicates that the terminal device receives the power saving duration information.

In a possible design, the second indication information includes first duration information, the first duration information indicates first duration, and the first duration is duration for which the terminal device expects to activate the power saving mode.

In a possible design, the processing module activates the power saving mode based on the power saving duration information, where the power saving duration information indicates the terminal device to activate the power saving mode. Alternatively, the transceiver module receives third indication information from the network device, and the processing module activates the power saving mode based on the third indication information, where the third indication information indicates the terminal device to activate the power saving mode. Alternatively, the processing module activates the power saving mode when determining that data transmission is completed.

In a possible design, the power saving duration information further includes configuration information of a first timer, and the configuration information of the first timer indicates the first timer. The terminal device activates the power saving mode when the first timer expires.

In a possible design, after activating the power saving mode, the processing module periodically enters a wake-up state within the power saving duration, or enters the wake-up state when the duration for which the power saving mode is activated is greater than or equal to a first threshold. The transceiver module receives clock information from the network device. The processing module performs clock synchronization based on the clock information.

In a possible design, the clock information is carried in one or more of the following signaling: a random access response, a superframe, a frame, or a beacon frame.

It should be noted that the modules in the sixteenth aspect or the possible designs of the sixteenth aspect can perform the corresponding functions in the method examples in the seventh aspect. For details, refer to detailed descriptions in the method examples. For beneficial effects, refer to related descriptions in the seventh aspect. Details are not described herein again.

According to a seventeenth aspect, an embodiment of this application provides a communication apparatus. The communication apparatus may be used in the network device in the eighth aspect or the possible designs of the eighth aspect, to implement a function performed by the network device. The communication apparatus may be the network device, or may be a chip, a system-on-chip, or the like of the network device. The communication apparatus may perform, by hardware or by hardware executing corresponding software, the function performed by the network device. The hardware or the software includes one or more modules corresponding to the foregoing function, for example, a transceiver module. The transceiver module is configured to: receive fourth information from a core network device and send fifth information, where the fourth information indicates that the core network device supports a configuration of a power saving mode, the fourth information is broadcast information, multicast information, or paging message, and the fifth information includes a part or all of content of the fourth information. The transceiver module is further configured to: receive a configuration request from a terminal device, and send the configuration request to the core network device, where the configuration request is for requesting to configure the power saving mode.

In a possible design, the fourth information further includes one or more of the following: identification information of the terminal device or identification information of a terminal device group associated with the terminal device.

In a possible design, the configuration request includes first duration information, the first duration information indicates first duration, and the first duration is duration that is in the power saving mode and that is expected by the terminal device.

In a possible design, the transceiver module is further configured to send third indication information to the terminal device, where the third indication information indicates the terminal device to activate the power saving mode.

In a possible design, the transceiver module is further configured to send clock information to the terminal device. The clock information is used by the terminal device to perform clock synchronization.

In a possible design, the clock information is carried in one or more of the following signaling: a random access response, a superframe, a frame, or a beacon frame.

It should be noted that the modules in the seventeenth aspect or the possible designs of the seventeenth aspect can perform the corresponding functions in the method examples in the eighth aspect. For details, refer to detailed descriptions in the method examples. For beneficial effects, refer to related descriptions in the eighth aspect. Details are not described herein again.

According to an eighteenth aspect, an embodiment of this application provides a communication apparatus. The communication apparatus may be used in the core network device in the ninth aspect or the possible designs of the ninth aspect, to implement a function performed by the core network device. The communication apparatus may be the core network device, or may be a chip, a system-on-chip, or the like of the core network device. The communication apparatus may perform, by hardware or by hardware executing corresponding software, the function performed by the core network device. The hardware or the software includes one or more modules corresponding to the foregoing function, for example, a transceiver module and a processing module. The processing module is configured to determine fourth information. The transceiver module is configured to send the fourth information, where the fourth information indicates that the core network device supports a configuration of a power saving mode, and the fourth information is broadcast information, multicast information, or a paging message. The transceiver module is further configured to receive a configuration request from a terminal device via a network device, where the configuration request is for requesting to configure the power saving mode.

In a possible design, the fourth information further includes one or more of the following: identification information of the terminal device or identification information of a terminal device group associated with the terminal device.

In a possible design, the configuration request includes first duration information, the first duration information indicates first duration, and the first duration is duration that is in the power saving mode and that is expected by the terminal device.

In a possible design, the transceiver module is further configured to send power saving duration information to the terminal device, where the power saving duration information indicates power saving duration.

In a possible design, before sending the power saving duration information to the terminal device, the transceiver module receives fourth indication information from the terminal device, where the fourth indication information indicates that the terminal device receives a power saving configuration.

In a possible design, after sending the power saving duration information to the terminal device, the transceiver module further receives second indication information from the terminal device, where the second indication information indicates that the terminal device receives the power saving duration information.

In a possible design, the second indication information includes first duration information, the first duration information indicates first duration, and the first duration is duration for which the terminal device expects to activate the power saving mode.

In a possible design, the power saving duration information further includes configuration information of a first timer, the configuration information of the first timer indicates the first timer, and the first timer is used by the terminal device to activate the power saving mode when the first timer expires.

It should be noted that the modules in the eighteenth aspect or the possible designs of the eighteenth aspect can perform the corresponding functions in the method examples in the ninth aspect. For details, refer to detailed descriptions in the method examples. For beneficial effects, refer to related descriptions in the ninth aspect. Details are not described herein again.

According to a nineteenth aspect, an embodiment of this application provides a communication apparatus. The communication apparatus includes one or more processors. The one or more processors are configured to run a computer program or instructions. When the one or more processors execute the computer instruction or the instructions, the communication apparatus is enabled to perform the communication method according to any one of the first aspect to the ninth aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one device. In other words, the processor and the memory may alternatively be integrated together. In a possible implementation, the communication apparatus further includes a transceiver. The transceiver is configured to: receive information and/or send information.

In a possible design, the communication apparatus further includes one or more communication interfaces. The one or more communication interfaces are coupled to the one or more processors, and the one or more communication interfaces are configured to communicate with a module other than the communication apparatus.

According to a twentieth aspect, an embodiment of this application provides a communication apparatus. The communication apparatus includes an input/output interface and a logic circuit. The input/output interface is configured to: input and/or output information. The logic circuit is configured to perform the communication method according to any one of the first aspect to the ninth aspect, to perform processing based on information and/or generate information.

According to a twenty-first aspect, an embodiment of this application provides a computer-readable storage medium. The computer-readable storage medium stores computer instructions or a program. When the computer instructions or the program is run on a computer, the communication method according to any one of the first aspect to the ninth aspect is performed.

According to a twenty-second aspect, an embodiment of this application provides a computer program product including computer instructions. When the computer program product is run on a computer, the communication method according to any one of the first aspect to the ninth aspect is performed.

According to a twenty-third aspect, an embodiment of this application provides a computer program. When the computer program is run on a computer, the communication method according to any one of the first aspect to the ninth aspect is performed.

For technical effects achieved by any design manner in the nineteenth aspect to the twenty-third aspect, refer to technical effects achieved by any one of the first aspect to the ninth aspect.

According to a twenty-fourth aspect, a communication system is provided. The communication system may include the terminal device according to the tenth aspect, the network device according to the eleventh aspect, and the core network device according to the twelfth aspect; may include the terminal device according to the thirteenth aspect, the network device according to the fourteenth aspect, and the core network device according to the fifteenth aspect; or may include the terminal device according to the sixteenth aspect, the network device according to the seventeenth aspect, and the core network device according to the eighteenth aspect.

### BRIEF DESCRIPTION OF DRAWINGS

FIG. 1 is a flowchart of performing selection, inventory, and access on a tag by a reader according to an embodiment of this application;
FIG. 2 is a flowchart of activating a power saving mode according to an embodiment of this application;
FIG. 3 is a diagram of activating a power saving mode according to an embodiment of this application;
FIG. 4 is a diagram of a communication system according to an embodiment of this application;
FIG. 5 is a diagram of a communication system according to an embodiment of this application;
FIG. 6 is a diagram of a communication system according to an embodiment of this application;
FIG. 7 is a diagram of a composition structure of a communication apparatus according to an embodiment of this application;
FIG. 8 is a flowchart of a communication method according to an embodiment of this application;
FIG. 9 is a flowchart of a communication method according to an embodiment of this application;
FIG. 10 is a flowchart of a communication method according to an embodiment of this application;
FIG. 11a is a diagram of clock synchronization according to an embodiment of this application;
FIG. 11b is a diagram of clock synchronization according to an embodiment of this application;
FIG. 11c is a diagram of clock synchronization according to an embodiment of this application;
FIG. 12 is a diagram of composition of a terminal device according to an embodiment of this application;
FIG. 13 is a diagram of composition of a network device according to an embodiment of this application;
FIG. 14 is a diagram of composition of a core network device according to an embodiment of this application; and
FIG. 15 is a diagram of composition of a communication apparatus according to an embodiment of this application.

### DESCRIPTION OF EMBODIMENTS

Before embodiments of this application are described, technical terms in embodiments of this application are described.

**Radio frequency identification (radio frequency identification, RFID) technology:** It is a non-contact automatic identification technology, and is mainly used for identity identification and user data reading and writing. An RFID system may usually include a reader (Reader) and a tag (Tag).

**Tag:** It may also be referred to as an electronic tag or an RFID tag, and may be classified into a passive tag, a semi-active tag, and an active tag. Working energy of the passive tag may be provided by the reader. For example, a part of energy of a continuous wave (continuous wave, CW) sent by the reader may be used for internal processing such as encoding/decoding and modulation/demodulation of the tag. In addition, the continuous wave may be further used as a carrier to carry uplink information of the tag. The passive tag may also be referred to as a passive internet of things (passive internet of things, passive IoT) device. A battery may be included inside the semi-passive tag. Internal processing such as encoding/decoding and modulation/demodulation may be powered by the battery, but the continuous wave of the reader still needs to be used as a carrier.

The tag is simply designed, in which an application layer and air interface signaling may be mixed together to support microwatt-level or 100-microwatt-level power consumption. The tag may perform encoding/decoding and transmission based on an on-off-keying (on-off-keying, OOK) modulation scheme, for example, decode data based on an amplitude modulation scheme and a high/low level. When a plurality of tags communicate with each other, a time division multiplexing manner may be used, and the plurality of tags use a serial reading manner. Because the tags do not support differentiation between a frequency domain and a code domain, parallel performance of the tags is poor.

**Reader:** It is a device having a read/write function, for example, may be a handheld or fixed device for reading or writing tag information. Alternatively, the reader may also be understood as a device communicating with the tag, and a form may be a terminal device, a base station, a device having the read/write function, an integrated access and backhaul (integrated access and backhaul, IAB) node, or the like. This is not limited.

For example, in a separated architecture, the reader may include a helper (helper) and a receiver (receiver). Downlink communication may be performed between the helper and the tag, and uplink/downlink communication may be performed between the helper and the receiver through an air interface or a wired connection. The helper may also be referred to as an excitation source.

The helper may be a terminal, or may be a base station or a small cell. Only downlink data transmission is performed between the device and the tag, and uplink/downlink data transmission may be performed between the device and the reader through an air interface or a wired connection.

In the RFID system, the reader may perform operations such as selection (select), inventory (inventory), and access (access) on the tag. The selection operation is for selecting one tag or a group of tags for inventory and access. The inventory operation may be understood as a process in which the reader identifies the tag, and an inventory rate of the RFID tag is an important performance indicator. The access operation may be understood as a process in which the reader interacts with the tag. The tag needs to be identified by the reader and then accessed.

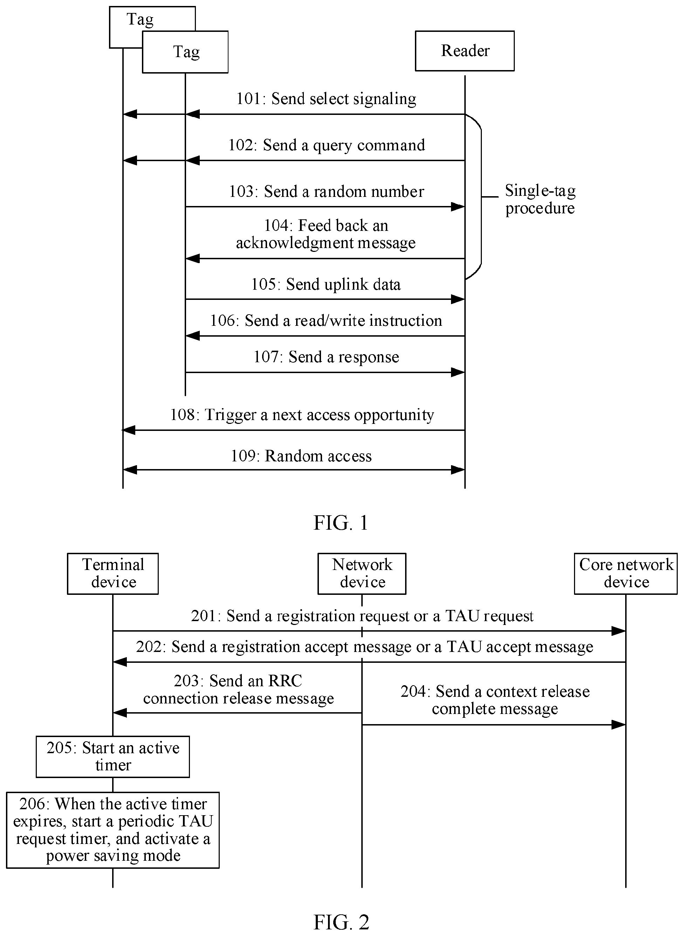

For example, a procedure in which the reader performs selection, inventory, and access on the tag may be shown in FIG. 1. Refer to FIG. 1. The procedure includes the following steps.

Step 101: The reader sends select (Select) signaling.

The select signaling may include tag memory information, and the reader may be used to select one tag or a group of tags for access by sending the select signaling.

Optionally, similar to a case that the reader sends the select signaling to select the one tag or the group of tags for the access, the reader may also send paging signaling to page one tag or a group of tags for access.

For example, the reader may select, by using the select signaling, a tag that matches a signaling selection condition to set a state of a specific inventoried flag, for example, to set a state A in a section 1 (session 1) of the inventoried flag to a state B, and select a tag that does not match the signaling selection condition to set the session 1 of the inventoried flag from the state B to the state A.

The inventoried flag has four mutually independent sessions, and each session further has two inventory states: a state A and a state B. The reader may select one session from the four sessions to indicate the tag to perform a setting action.

Alternatively, it may be described as follows: The select signaling is used to select or page one tag or a group of tags for access, and the matched tag selected by the reader may flip/not flip the state of the session of the flag as indicated by the reader. Specifically, a tag that matches mask information may change the state that is of the session and that is indicated by the select signaling, for example, change the state to the state A or the state B.

Specifically, as shown in the following table 1, the select signaling may include the following bit fields:

**Table 1**

| | Bit | Description |
|---|---|---|
| Signaling (command) | 4 | 1010 |
| Target (target) | 3 | 000: Inventoried (S0); 001: Inventoried (S1); |
| | | 010: Inventoried (S2); 011: Inventoried (S3); |
| | | 100: SL; 101: RFU; |
| | | 110: RFU; 111: RFU |
| Action (action) | 3 | See the following table 2 |
| Selected area (MemBank) | 2 | 00: File type; 01: EPC; |
| | | 10: TID; 11: File_0 |
| Pointer (pointer) | EBV | Starting mask address |
| Length (length) | 8 | Mask length (bits) |
| Mask (mask) | Variable (variable) | Mask value |
| Truncation (truncate) | 1 | 0: Disable truncation; 1: Enable truncation |
| Cyclic redundancy check (CRC) | 16 | CRC-16 |

The target may indicate that the select signaling changes a selected flag (selected flag, SL) or an inventoried (Inventoried) flag.

Inventoried (Inventoried) flag: The inventoried flag has four mutually independent sessions, and each session further has two inventoried states: a state A and a state B. A tag that has been inventoried currently flips the state of the session. This avoids that a same tag is identified for a plurality of times in a round of inventoried process.

Selected flag (SL): It includes two states: a declared state and an undeclared state, and has a function similar to that of the session.

Action: It is to change a state of the selected flag or the inventoried flag. As shown in the following table 2, when the action indicates 010, it indicates that a tag that meets a selection condition makes no state change, and a tag that does not meet the selection condition performs undeclared setting on the SL, or sets an indicated state of a session (for example, the session 1) of an inventoried flag to B.

**Table 2**

| Action | Selection condition that is met | Selection condition that is not met |
|---|---|---|
| 000 | Declared SL or inventoried → A | Undeclared SL or inventoried → B |
| 001 | Declared SL or inventoried → A | Do nothing |
| 010 | Do nothing | Undeclared SL or inventoried → B |
| 011 | Flipped SL or (A → B, B → A) | Do nothing |
| 100 | Undeclared SL or inventoried → B | Declared SL or inventoried → A |
| 101 | Undeclared SL or inventoried → B | Do nothing |
| 110 | Do nothing | Declared SL or inventoried → A |
| 111 | Do nothing | Flipped SL or (A → B, B → A) |

MemBank, pointer, length, and mask: They are used to select a tag whose data in a specific storage area is consistent with that in the mask. Only the selected tag can participate in subsequent inventory operations. This can be understood as the selection condition.

Truncate: It indicates the tag to return only some product electronic codes (electronic product codes, EPCs).

Step 102: The reader sends a query (Query) command.

The query signaling sent by the reader may be used to initialize an inventory cycle, and may specifically include a specific state of a session of an inventoried flag, for example, the state B of the session 1, and the reader is used to select a tag with the state B of the session 1 for access.

The query command may further include a random access resource configuration (for example, a parameter Q), and the tag calculates a maximum quantity of sending slots based on the random access configuration (the parameter Q) and randomly selects an access slot for random access.

For example, the random access resource configuration may include a maximum access slot range.

For a plurality of tags selected by the reader, inventory and access may be performed in a time division multiplexing manner. To be specific, after the inventory and the access on a tag are ended, the reader starts to perform inventory and access on a next tag. The following steps are described by using the inventory and the access on one tag as an example.

Step 103: The tag sends a random number (random number, RN) to the reader.

For example, the random number may be a 16-bit random number (an RN 16).

A tag with a state of a session (for example, the state A of the session 1) that matches the query signaling may select a random access opportunity or an access slot.

For example, the tag may calculate a maximum access slot range of [0, 2Q-1] based on a value of Q. The tag may randomly select a value in the range, and store the value as a counter. Each time a dedicated signaling query response (QueryRep) is received, counter=counter-1. When the counter is equal to 0, the tag may send a random number, for example, the RN 16.

It should be noted that, if the corresponding slot is 0 after the reader sends the query signaling, the tag that generates the counter with the initial value of 0 may initiate access after the tag receives the query signaling.

Step 104: The reader feeds back an acknowledgment (acknowledgment, ACK) message to the tag.

If successfully receiving the random number sent by the tag, the reader may send the acknowledgment message to the tag. The acknowledgment message may include the random number sent by the tag to the reader.

After receiving, within specified time, the acknowledgment message that carries the random number sent by the tag, the tag may perform step 105.

Step 105: The tag sends uplink data to the reader.

For example, the uplink data may be an electronic product code (electronic product code, EPC).

Optionally, after step 105, as shown in step 106 and step 107, the reader may further send an instruction to the tag, perform a read/write operation or the like on the tag, and interact with the tag. After receiving the instruction, the tag may respond to the instruction.

Step 108: The reader triggers a next access opportunity.

After ending processing the one tag, the reader may send QueryRep signaling. After receiving the signaling, a tag in communication with the reader flips an inventoried flag, for example, sets the inventoried flag from the state B to the state A. The signaling may alternatively be used to trigger the next access opportunity, that is, an operation of subtracting 1 is performed on a tag whose counter is not 0. When the counter is equal to 0, access may be initiated.

Step 109: The reader selects the tag in the next access opportunity to initiate a random access procedure.

The reader may initiate the random access procedure for the tag in the next access opportunity with reference to the foregoing procedure. Details are not described again.

**Power saving mode (power saving mode, PSM):** After activating the power saving mode, the terminal device does not receive any network paging. For a network side, the terminal device is unreachable in this case, and none of data, short messages, and calls can be received. That is, the terminal device is in a sleep mode, and is almost powered off. This can greatly save power.

For example, as shown in FIG. 2, the terminal device may activate the power saving mode based on the following steps.

Step 201: The terminal device sends a registration request or a tracking area update (tracking area update, TAU) request to a core network device. Correspondingly, the core network device receives the registration request or the TAU request from the terminal device.

The terminal device may initiate a registration procedure or a TAU procedure to the core network device, and include a timer configuration request in the registration request or the TAU request, to obtain an active (active) timer configuration and a periodic TAU request timer configuration.

Optionally, the timer configuration request includes information about timer duration expected by the terminal device.

Step 202: The core network device sends a registration accept message or a TAU accept message to the terminal device. Correspondingly, the terminal device receives the registration accept message or the TAU accept message from the core network device.

The registration accept message or the TAU accept message may include a timer configuration, and the timer configuration may include the active timer configuration and the periodic TAU request timer configuration.

Optionally, timer duration indicated by the timer configuration may be the same as or different from the timer duration expected by the terminal device.

Step 203: A network device sends a radio resource control (radio resource control, RRC) connection release message to the terminal device. Correspondingly, the terminal device receives the RRC connection release message from the network device.

When the terminal device completes service transmission, the network device may send the RRC connection release message to the terminal device.

Step 204: The network device sends a context release complete message to the core network device. Correspondingly, the core network device receives the context release complete message from the network device.

Step 205: The terminal device starts an active timer.

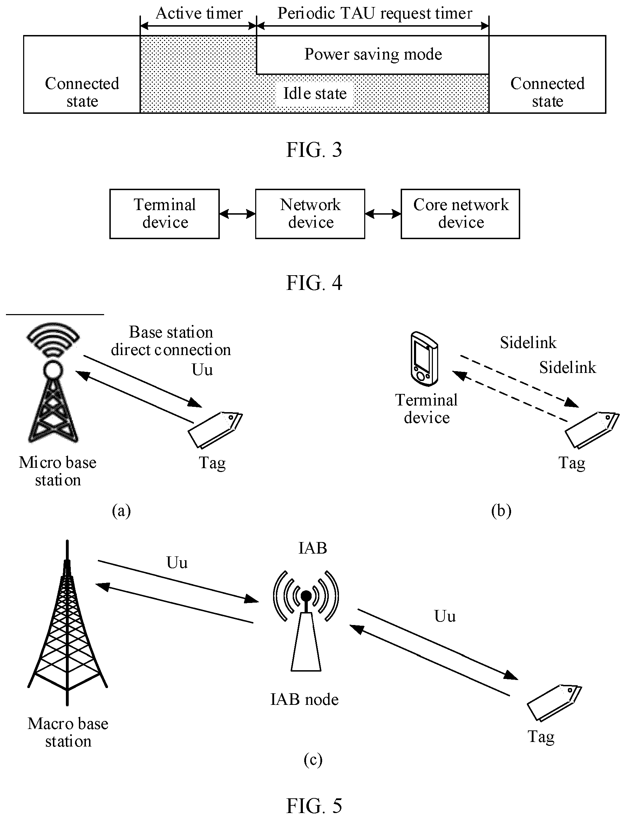

When the terminal device releases an RRC connection to the network device, the terminal device may start the active timer. Alternatively, as shown in FIG. 3, it may be described as that the terminal device leaves a connected state, and starts the active timer after entering an idle state.

During running of the active timer, the terminal device may normally receive a paging message sent by the network device, or may perform radio resource management (radio resource measurement, RRM) measurement or the like.

Step 206: When the active timer expires, the terminal device starts a periodic TAU request timer, and activates a power saving mode.

The periodic TAU request timer may also be used to define time at which the terminal device activates the power saving mode. When the terminal device starts the periodic TAU request timer, it may be considered that the terminal device activates the power saving mode.

In the power saving mode, the terminal device does not receive any network paging. For a network side, the terminal device is unreachable in this case, and none of data, short messages, and calls can be received. That is, the terminal device is in a sleep mode, and is almost powered off. This can greatly save power.

Optionally, as shown in FIG. 3, when the periodic TAU request timer expires, the terminal device exits the power saving mode. Alternatively, when the terminal device needs to process an MO service, the terminal device actively exits the power saving mode; and enters an idle state, and enters the connected state to process an uplink/downlink service.

Based on this, the power saving mode may be applied to an RFID tag. However, the foregoing power saving process shown in FIG. 2 is actively triggered by the terminal device, but the terminal device with a low complexity capability (for example, a tag) may not be able to actively trigger the power saving process, and further may not be able to activate the power saving mode. In addition, the foregoing power saving configuration process is a one-to-one configuration process, resulting in high signaling overheads.

To resolve the foregoing technical problem, embodiments of this application provide a communication method. The method may include: A terminal device receives first information from a network device, and activates a power saving mode. The first information is broadcast information, multicast information, or a paging message; and the first information includes power saving duration information indicating power saving duration, and duration for which the terminal device is in the power saving mode is less than or equal to the power saving duration.

In embodiments of this application, a network side actively triggers a power saving configuration procedure for the terminal device by delivering the first information, so that the terminal device with a low complexity capability can activate the power saving mode, thereby reducing power consumption. In addition, because the first information is the broadcast information, the multicast information, or the paging message, that is, the network side may simultaneously configure the power saving duration information for one or more terminal devices, signaling overheads in a power saving configuration process can be reduced.

The following describes implementations of embodiments of this application in detail with reference to the accompanying drawings in this specification.

The communication method provided in embodiments of this application may be applied to any communication system. The communication system may be a third generation partnership project (third generation partnership project, 3GPP) communication system like an RFID system, a long term evolution (long term evolution, LTE) system, a fifth generation (fifth generation, 5G) mobile communication system, a new radio (new radio, NR) communication system, or a vehicle-to-everything (vehicle-to-everything, V2X) system. The communication method may be further applied to a system in which LTE and 5G hybrid networking is used, a non-terrestrial network (non-terrestrial network, NTN) system, a device-to-device (device-to-device, D2D) communication system, a machine-to-machine (machine-to-machine, M2M) communication system, an internet of things (internet of things, IoT) system, a universal mobile telecommunications system (universal mobile telecommunications system, UMTS), a code division multiple access (code division multiple access, CDMA) system, another next-generation communication system, for example, a future communication system like 6G, a non-3GPP communication system like a wireless local area network (wireless local area network, WLAN), or the like. This is not limited.

For example, the communication method provided in embodiments of this application may be applied to an ultra-low power consumption communication scenario, for example, a communication scenario in which power consumption is below a milliwatt level or at a microwatt level, for example, an RFID scenario or an X-IoT (where X may be a passive or semi-passive internet of things) scenario.

It should be noted that the foregoing communication systems and communication scenarios applicable to this application are merely examples for description, and communication systems applicable to this application are not limited thereto. This is uniformly described herein, and details are not described below again.

The following uses FIG. 4 as an example to describe a communication system provided in embodiments of this application.

FIG. 4 is a diagram of a communication system according to an embodiment of this application. As shown in FIG. 4, the communication system may include a terminal device, a network device, and a core network device.

In FIG. 4, the terminal device may be located within coverage of one or more cells (or carriers) provided by the network device, and there may be one or more cells serving the terminal device. When there are the plurality of cells serving the terminal device, the terminal device may operate in a carrier aggregation (carrier aggregation, CA), dual connectivity (dual connectivity, DC), or coordinated multipoint transmission manner, and at least one cell provides more than one numerology (numerology) and provides a radio resource for the terminal device.

The terminal device may perform air interface communication with the network device through an uplink (uplink, UL) or a downlink (downlink, DL). For example, the terminal device may send uplink data to the network device in an UL direction through a physical uplink shared channel (physical uplink shared channel, PUSCH), and the network device may send downlink data to the terminal device in a DL direction through a physical downlink shared channel (physical downlink shared channel, PDSCH).

Optionally, the terminal device may be a passive terminal device. To be specific, energy and a carrier that are needed when the terminal device operates may be provided by the network device.

Optionally, the network device in this application may be used as a reader, or the network device may implement a function of the reader. The terminal device may be used as a tag, or the terminal device may be a device including the tag. The terminal device may also implement the function of the reader. The reader may be understood as another type of terminal device.

The tag may be located within coverage provided by the reader. When the reader is a terminal device, communication between the reader and the tag may be considered as transmission between terminal devices. When the reader is a network device, communication between the reader and the tag is Uu interface communication, that is, air interface communication.

Optionally, the terminal device in FIG. 4 may be a device having a wireless transceiver function, or a chip or a chip system that may be disposed in the device, and may be configured to provide voice and/or data connectivity for a user. The terminal device may also be referred to as user equipment (user equipment, UE), a terminal (terminal), a mobile station (mobile station, MS), a mobile terminal (mobile terminal, MT), or the like. For example, the terminal device in FIG. 4 may be a handheld device or a vehicle-mounted device that has the wireless connection function, for example, a mobile phone (mobile phone), a tablet computer, a notebook computer, a palmtop computer, or a computer with the wireless transceiver function. The terminal device may alternatively be a mobile internet device (mobile internet device, MID), a wearable device, a virtual reality (virtual reality, VR) terminal, an augmented reality (augmented reality, AR) terminal, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle with a vehicle-to-vehicle (vehicle-to-vehicle, V2V) communication capability, an intelligent connected vehicle, an uncrewed aerial vehicle with an uncrewed aerial vehicle-to-uncrewed aerial vehicle (UAV to UAV, U2U) communication capability, or the like. This is not limited.

Optionally, the network device in FIG. 4 may be any device that is deployed in an access network and that can perform wireless communication with the terminal device, and is mainly configured to implement functions such as radio physical control, resource scheduling and radio resource management, radio access control, and mobility management. Specifically, the network device may be a device supporting wired access, or may be a device supporting wireless access. For example, the network device may be an access network (access network, AN) device/a radio access network (radio access network, RAN) device, and includes a plurality of AN/RAN nodes. The AN/RAN node may be a NodeB (NodeB, NB), a macro base station, a micro base station, a relay station, an enhanced NodeB (enhanced NodeB, eNB), a next generation NodeB (NR NodeB, gNB), a radio network controller (radio network controller, RNC), a base station controller (base station controller, BSC), a base transceiver station (base transceiver station, BTS), a home base station (for example, a home evolved NodeB (home evolved NodeB) or a home NodeB (home NodeB, HNB)), a baseband unit (baseband unit, BBU), an access point (access point, AP), a wireless fidelity AP (wireless fidelity AP, Wi-Fi AP), a transmission reception point (transmission reception point, TRP), a transmission point (transmission point, TP), a wireless relay node, a wireless backhaul node (namely, an IAB node) in integrated access and backhaul (integrated access and backhaul, IAB), another type of access node, a reader, a read apparatus, or the like. This is not limited.

Optionally, the network device in FIG. 4 may alternatively be of a central unit (centralized unit, CU)/distributed unit (distributed unit, DU) architecture. In this case, the network device may include a CU, or include a DU, or include the CU and the DU. The network device including the CU and the DU may split protocol layers of an eNB in an LTE communication system. Functions of some protocol layers are controlled by the CU in a centralized manner. Functions of some or all of remaining protocol layers are distributed in the DU, and the CU controls the DU in the centralized manner.

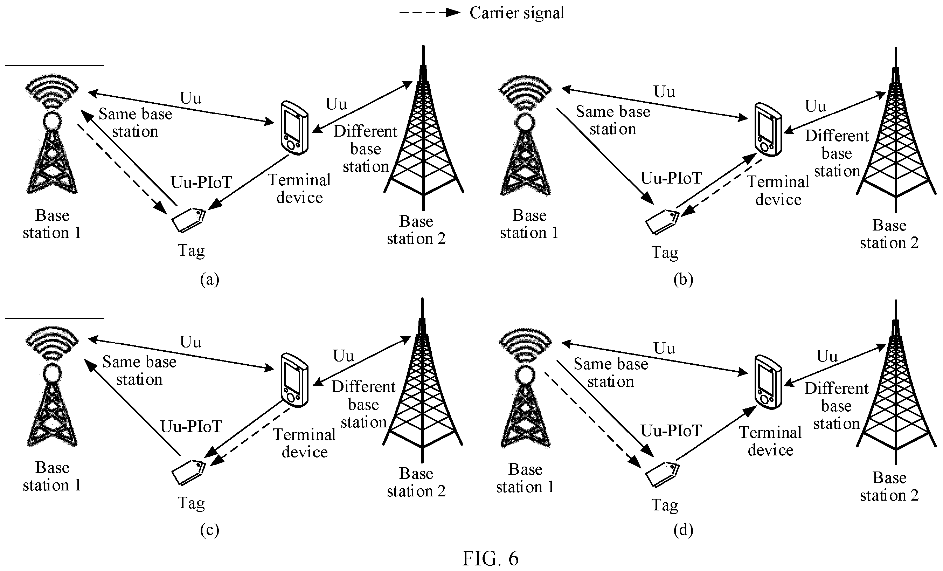

Based on the foregoing descriptions of the terminal device and the network device, for example, as shown in (a) in FIG. 5, a base station may be a micro base station (Micro BS), and the micro base station may communicate with a tag through a Uu interface. As shown in (b) in FIG. 5, a terminal device may communicate with a tag through a sidelink (sidelink, SL). As shown in (c) in FIG. 5, a base station may be an IAB node, and the IAB node may communicate with a macro base station (Macro BS) through a Uu interface, and communicate with a tag through a Uu interface.

In still another example, a separated architecture may also be supported in communication between the terminal device and the network device. As shown in FIG. 6, an example in which the terminal device is used as an excitation source (helper) is used. Uplink communication or downlink communication may be performed between the terminal device and a base station. As shown in (a) in FIG. 6, a base station 1 may provide a carrier signal for a tag, uplink communication may be performed between the base station 1 and the tag, and downlink communication may be performed between the tag and the terminal device. Alternatively, as shown in (b) in FIG. 6, the terminal device may provide a carrier signal for a tag, downlink communication may be performed between a base station 1 and the tag, and uplink communication may be performed between the tag and the terminal device. Alternatively, as shown in (c) in FIG. 6, the terminal device may provide a carrier signal for a tag, uplink communication may be performed between a base station 1 and the tag, and downlink communication may be performed between the tag and the terminal device. Alternatively, as shown in (d) in FIG. 6, a base station 1 may provide a carrier signal for a tag, downlink communication may be performed between the base station 1 and the tag, and uplink communication may be performed between the tag and the terminal device.

It should be noted that, in FIG. 6, a base station that can communicate with the tag and can also communicate with the terminal device may be referred to as a same base station (for example, the base station 1) between the tag and the terminal device. A base station that can only communicate with the tag, or a base station that can only communicate with the terminal device may be referred to as a different base station (for example, a base station 2) between the tag and the terminal device.

Optionally, the core network device in FIG. 4 may be a general term of a plurality of functional entities used for user management, data transmission, and a network device configuration.

For example, the core network device may include network elements such as a mobility management network element, a session management network element, and a user plane network element. This is not limited.

The mobility management network element may be an access and mobility management function (access and mobility management function, AMF). The session management network element may be a session management function (session management function, SMF). The user plane network element may be a user plane function (user plane function, UPF).

It should be noted that the terminal device, the network device, and the core network device in embodiments of this application each may be one or more chips, or may be a system on chip (system on chip, SoC), or the like. FIG. 4 is merely an example accompany drawing, and a quantity of devices included in FIG. 4 is not limited. In addition, in addition to the devices shown in FIG. 4, the communication system may further include another device. Names of the devices and the links in FIG. 4 are not limited. In addition to the names shown in FIG. 4, the devices and the links may have other names. This is not limited.

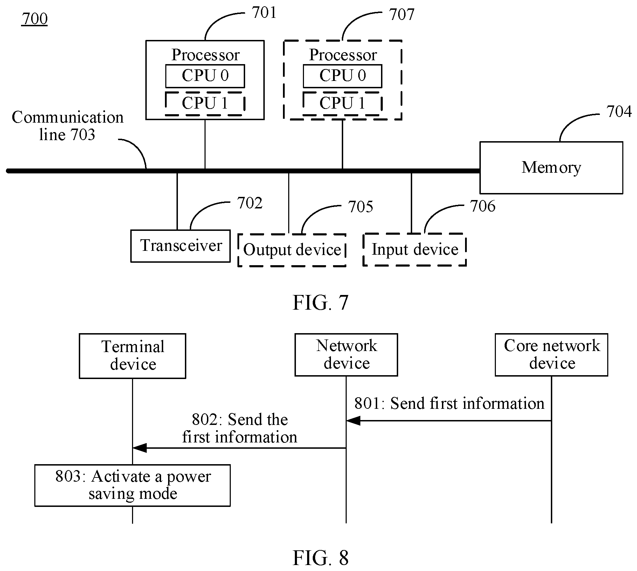

During specific implementation, as shown in FIG. 4, FIG. 5, or FIG. 6, for example, each terminal device, each network device, and each core network device may use a composition structure shown in FIG. 7, or include components shown in FIG. 7. FIG. 7 is a diagram of composition of a communication apparatus 700 according to an embodiment of this application. The communication apparatus 700 may be a terminal device or a chip or a system on chip in the terminal device, or may be a network device or a chip or a system on chip in the network device, or may be a core network device or a chip or a system on chip in the core network device. As shown in FIG. 7, the communication apparatus 700 includes a processor 701, a transceiver 702, and a communication line 703.

Further, the communication apparatus 700 may include a memory 704. The processor 701, the memory 704, and the transceiver 702 may be connected through the communication line 703.

The processor 701 is a central processing unit (central processing unit, CPU), a general-purpose processor, a network processor (network processor, NP), a digital signal processor (digital signal processing, DSP), a microprocessor, a microcontroller, a programmable logic device (programmable logic device, PLD), or any combination thereof. Alternatively, the processor 701 may be another apparatus having a processing function, for example, a circuit, a device, or a software module. This is not limited.

The transceiver 702 is configured to communicate with another device or another communication network. The another communication network may be an Ethernet, a radio access network (radio access network, RAN), a wireless local area network (wireless local area network, WLAN), or the like. The transceiver 702 may be a module, a circuit, a transceiver, or any apparatus that can implement communication.

The communication line 703 is configured to perform information transmission between the components included in the communication apparatus 700.

The memory 704 is configured to store instructions. The instructions may be a computer program.

The memory 704 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 704 may exist independently of the processor 701, or may be integrated with the processor 701. The memory 704 may be configured to store instructions, program code, some data, or the like. The memory 704 may be located inside the communication apparatus 700, or may be located outside the communication apparatus 700. This is not limited. The processor 701 is configured to execute the instructions stored in the memory 704, to implement a communication method provided in the following embodiment of this application.

In an example, the processor 701 may include one or more CPUs, for example, a CPU 0 and a CPU 1 in FIG. 7.

In an optional implementation, the communication apparatus 700 includes a plurality of processors. For example, in addition to the processor 701 in FIG. 7, the communication apparatus 700 may further include a processor 707.

In an optional implementation, the communication apparatus 700 further includes an output device 705 and an input device 706. For example, the input device 706 is a device, for example, a keyboard, a mouse, a microphone, or a joystick, and the output device 705 is a device, for example, a display or a speaker (speaker).

It should be noted that the communication apparatus 700 may be a desktop computer, a portable computer, a network server, a mobile phone, a tablet computer, a wireless terminal, an embedded device, a chip system, or a device having a structure similar to that in FIG. 7. In addition, a composition structure shown in FIG. 7 does not constitute a limitation on the communication apparatus. In addition to the components shown in FIG. 7, the communication apparatus may include more or fewer components than those shown in the figure, or some components may be combined, or different component arrangements may be used.

In this embodiment of this application, the chip system may include a chip, or may include a chip and another discrete device.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in FIG. 4, FIG. 5, or FIG. 6, a communication method provided in an embodiment of this application is described in FIG. 8. A terminal device may be any terminal device in the communication system shown in FIG. 4, FIG. 5, or FIG. 6, a network device may be any network device in the communication system shown in FIG. 4, FIG. 5, or FIG. 6, and a core network device may be any core network device in the communication system shown in FIG. 4. The terminal device, the network device, and the core network device in the following embodiments may all have the components shown in FIG. 7. Processing performed by a single execution body (the terminal device, the network device, or the core network device) shown in embodiments of this application may alternatively be performed by a plurality of execution bodies. These execution bodies may be logically and/or physically separated. This is not limited. The network device in this application may alternatively be replaced with another type of terminal device.

FIG. 8 shows a communication method according to an embodiment of this application. As shown in FIG. 8, the method may include the following steps.

Step 801: A core network device sends first information. Correspondingly, a network device receives the first information from the core network device.

When a function of a reader is implemented on a terminal device, the core network device may send the first information to the terminal device, and specifically, may send the first information to the terminal device via the network device. Therefore, based on the descriptions of the network device in the specification, the network device may be replaced with a terminal device, that is, interaction between a network device and a terminal device may be considered as data exchange between two terminal devices.

The first information may include power saving duration information, and the power saving duration information may indicate power saving duration. The first information may be broadcast information, multicast information, or a paging message, and the paging message may alternatively be select signaling.

Optionally, the core network device that sends the first information obtains a service cycle of one or more terminal devices from an application function network element, a session management network element, a user plane network element, or another core network device, configures power saving duration for the one or more terminal devices based on the service cycle, includes power saving duration information in first information, and sends the first information, to actively trigger a power saving configuration procedure for the terminal device, so that the terminal device with a low complexity capability can also activate a power saving mode, and the power saving duration information can also be configured for the one or more terminal devices simultaneously, so that the power saving duration information is not configured for the terminal devices one by one, and signaling overheads in a power saving configuration process are reduced.

For example, the core network device that sends the first information may be a mobility management network element, for example, an AMF.

Optionally, the core network device indicates the power saving duration through a timer. To be specific, the power saving duration information may be configuration information of a power saving timer, and duration of the power saving timer is the power saving duration.

Optionally, the first information further includes one or more of the following: identification information of the terminal device, identification information of a terminal device group associated with the terminal device, or first indication information.

The core network device may include identification information of the one or more terminal devices in the first information. When the terminal device receives the first information, if the first information includes the identification information of the terminal device, the terminal device may determine the power saving duration based on the power saving duration information in the first information.

Alternatively, the core network device may include, in the first information, identification information of a terminal device group associated with the one or more terminal devices. When the terminal device receives the first information, if the first information includes the identification information of the terminal device group associated with the terminal device, the terminal device may determine the power saving duration based on the power saving duration information in the first information.

The core network device may also include the first indication information in the first information. The first indication information indicates that the power saving duration information is used for a terminal device supporting the power saving mode. When the terminal device receives the first information, if the terminal device supports the power saving mode, the terminal device may determine the power saving duration based on the power saving duration information in the first information. Alternatively, the first indication information may indicate a terminal device supporting the power saving mode to initiate an access procedure, or the first indication information indicates that the network device supports a power saving configuration.

Step 802: The network device sends the first information. Correspondingly, the terminal device receives the first information from the network device.

After receiving the first information sent by the core network device, the network device may send the first information to the terminal device. The terminal device may receive the first information when being in a connected state, or may receive the first information when being in a non-connected state. This is not limited.

Specifically, the first information sent by the network device may include the power saving duration information, and the power saving duration information may indicate the power saving duration. The first information may be the broadcast information, the multicast information, or the paging message.

For related descriptions of the first information, refer to related descriptions of the first information in step 801. Details are not described again.

Step 803: The terminal device activates the power saving mode.

Duration for which the terminal device is in the power saving mode may be less than or equal to the power saving duration.

That the terminal device activates the power saving mode may alternatively be described as that the terminal device enters the power saving mode, described as that the terminal device starts the power saving mode, or described as that the terminal device performs communication in the power saving mode.

The terminal device in the power saving mode may skip receiving downlink data (or a downlink signal); or the terminal device in the power saving mode may neither receive downlink data (or a downlink signal) nor send uplink data.

In a first possible design, the terminal device activates the power saving mode based on the first information.

The first information may indicate the terminal device to activate the power saving mode. The terminal device may activate the power saving mode when receiving the first information.

In a second possible design, the terminal device receives third indication information from the network device, and activates the power saving mode based on the third indication information.

The third indication information may indicate the terminal device to activate the power saving mode.

In a third possible design, the terminal device activates the power saving mode when determining that data transmission is completed.

The terminal device may determine, after sending data to the network device, that the data transmission is completed, or may determine, when receiving a message that is sent by the network device and that indicates that the data has been successfully received, that the data transmission is completed.

Before, when, or after sending third indication information, the network device may send fifth indication information to the core network device. The fifth indication information may indicate that the terminal device completes the data transmission, or the terminal device is to activate the power saving mode.

Optionally, the fifth indication information sent by the network device may indicate time at which the terminal device activates the power saving mode. The time may be absolute time, for example, a specific frame number, or specific minutes and seconds, or may be relative time, that is, a time interval from a moment at which signaling is sent, for example, several minutes, seconds and milliseconds. Alternatively, time from a next beacon (Beacon) frame/synchronization signal/system message may be indicated, and correspondingly, the terminal device also activates the power saving mode at the corresponding time.

In an implementation, when receiving the fifth indication information, the terminal device may stop the data transmission with the network device, and activate the power saving mode after stopping the data transmission with the network device.

For example, the network device may send, to the terminal device as the fifth indication information, one or more of the following indication information or messages: query response signaling, a response message, a feedback message, an acknowledgment message, an end indication, a release indication, or the like, to indicate that the data is successfully received or to indicate that the terminal device completes the data transmission. This is not limited.

Optionally, the network device further sends sixth indication information to the core network device. The sixth indication information is for requesting to release the terminal device, indicates that the network device determines to release the terminal device, or indicates that the network device completes the release of the terminal device.

Optionally, the core network device sends seventh indication information to the network device. The seventh indication information indicates that the core network device agrees to release the terminal device, or indicates that the release of the terminal device is completed.

Optionally, when the terminal device activates the power saving mode based on the fifth indication information, the core network device starts, based on the sixth indication information or the seventh indication information, power saving duration corresponding to the terminal device, so that a time point at which the terminal device starts the power saving duration is aligned with a time point at which the core network device starts the power saving duration.

Optionally, in the foregoing three possible designs, before activating the power saving mode, the terminal device further determines, based on a security parameter, whether the first information is valid. If the first information is valid, the terminal device may activate the power saving mode based on the power saving duration information in the first information.

The first information may include the security parameter.

For example, the security parameter may include one or more of the following: a random number, a message authentication code for integrity (message authentication code for integrity, MAC-I), a key index, a group key index, or an encryption algorithm.

Specifically, the power saving configuration (for example, the power saving duration information) may be encrypted information. The terminal device may decrypt the encrypted power saving configuration based on the security parameter in the first information. If the decryption succeeds, the terminal device considers that the first information is valid or the power saving configuration is valid. In another implementation, integrity protection is performed on the first information. The terminal device may determine, based on the security parameter in the first information, whether the MAC-I or other information used for the integrity protection in the first information is correct and valid. If the MAC-I or the other information used for the integrity protection in the first information is correct and valid, it is considered that the first information is reliable, and the power saving configuration is also trustworthy, and is a configuration that can be used by the terminal device.

Optionally, in the foregoing three possible designs, before activating the power saving mode, the terminal device first starts a first timer, and when the first timer expires, the terminal device activates the power saving mode.

The first information may include configuration information of the first timer, and the configuration information of the first timer may indicate the first timer.

During running of the first timer, the terminal device may normally send the uplink data, or receive the downlink data or the downlink signal from the network device.

Optionally, before activating the power saving mode, the terminal device sends second indication information to the core network device.

The second indication information may indicate that the terminal device receives the power saving duration information. The second indication information may alternatively be described as a response message, a feedback message, or an acknowledgment message of the terminal device for the power saving duration information sent by the core network device, or may be described as that the terminal device agrees on the power saving duration configured by the core network device. Details are not described again.

In a first example, if the core network device and the network device page terminal devices in a group manner or page at least one terminal device, each paged terminal device may send the second indication information to the core network device via the network device after performing an access procedure.

During random access, the terminal device may send a preamble (preamble) or a random number (for example, an RN 16) to request the access. After receiving a message (for example, a random number or an access request message) sent by the terminal device, the network device may return a response message to the terminal device. The response message may alternatively be a conflict resolution message or another name (for example, an ACK message). This is not limited.

It should be noted that, if the terminal device sends a random number, the random number may be a 16-bit random number (for example, the RN 16), or may be a random number of another length. A quantity of bits of the random number may be included in signaling indicated by the network device to the terminal device, or may be pre-specified in a protocol. If the terminal device sends the preamble, after the network device receives the preamble, the network device may return a response message to the terminal device, and the terminal device sends a random number again for access. A quantity of bits of the random number may be 16 bits or another quantity of bits specified by the network device or specified in the protocol.

After successfully accessing a network, the terminal device may send the second indication information to the core network device via the network device.

Optionally, the terminal device includes the second indication information in one or more of the following: data information, a non-access stratum (non-access stratum, NAS) message, a TAU request, or registration request information, and sends, to the core network device via the network device, the one or more of the following: the data information, the non-access stratum message, the TAU request, or the registration request information.

Optionally, after successfully accessing the network, the terminal device further sends the data information to the core network device.

It should be noted that the terminal device may send the data information and the second indication information to the core network device simultaneously; may first send the data information and then send the second indication information; or may first send the second indication information and then send the data information. This is not limited.

In a second example, if the core network device and the network device page a single terminal device, the terminal device may directly send the second indication information to the core network device without performing an access procedure (specifically, the terminal device may send the second indication information to the core network device via the network device). Optionally, in addition to the second indication information, the terminal device may further send temporary identification information to the network device or the core network device. The temporary identification information may be a random number generated by the terminal device, or allocated by the network device, or allocated by the core network device. It should be noted that the random number in this application may be a random number or a pseudo-random number. This is not limited.

Optionally, the terminal device includes the second indication information in one or more of the following: data information, a NAS message, or an RRC message, and sends, to the core network device, the one or more of the following: the data information, the NAS message, or the RRC message. If the second indication information is included in the RRC message, the network device sends the second indication information to the core network device by using a message between the network device and the core network interface.

Based on the method shown in FIG. 8, the core network device actively triggers the power saving configuration procedure for the terminal device by delivering the first information, so that the terminal device with the low complexity capability can activate the power saving mode, thereby reducing power consumption. In addition, because the first information is the broadcast information, the multicast information, or the paging message, that is, the core network device may simultaneously configure the power saving duration information for the one or more terminal devices, signaling overheads in the power saving configuration process can be reduced.

Based on the method shown in FIG. 8, in another implementation, based on the foregoing procedure, the power saving duration configured by the core network device for the terminal device may be cycle duration. That is, the terminal device wakes up at an interval of the power saving duration (or described as that the terminal device enters a wake-up state or enters a normal non-power saving mode after sleeping for the power saving duration each time). Optionally, the terminal device wakes up for second duration at the interval of the power saving duration, where the second duration may be configured by the core network device or the network device or specified in the protocol. The terminal device may attempt to receive the downlink data or the signal within the second duration. Optionally, the terminal device may also send the uplink data.

Optionally, the power saving duration is first duration, and the first duration is duration for which the terminal device expects to activate the power saving mode.

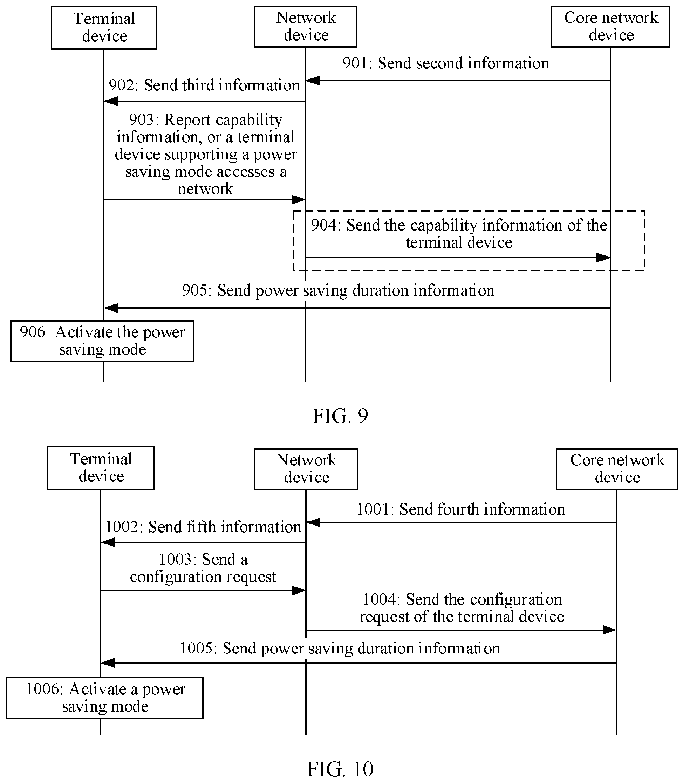

Different from that the core network device directly delivers the power saving duration information to the terminal device via the network device in FIG. 8, as shown in FIG. 9, the core network device may alternatively first negotiate with the terminal device, and send the power saving duration information to the terminal device when determining that the terminal device supports the power saving mode.

FIG. 9 shows a communication method according to an embodiment of this application. As shown in FIG. 9, the method may include the following steps.

Step 901: A core network device sends second information. Correspondingly, a network device receives the second information from the core network device.

When a function of a reader is implemented on a terminal device, the core network device may send the second information to the terminal device, and specifically, may send the first information to the terminal device via the network device.

The second information may indicate a terminal device supporting a power saving mode to report capability information, or the second information indicates a terminal device supporting a power saving mode to access the network device. The second information is broadcast information, multicast information, or a paging message, and the paging message may alternatively be select signaling.

Optionally, the second information may include one or more of the following: identification information of the terminal device or identification information of a terminal device group associated with the terminal device.

The core network device may include identification information of one or more terminal devices in the second information. When the terminal device receives the second information, if the second information includes the identification information of the terminal device, the terminal device may report, to the core network device via the network device, the capability information indicating that the terminal device supports the power saving mode. If the terminal device does not support the power saving mode, the terminal device may not need to report the capability information, or the terminal device may report the capability information indicating that the terminal device does not support the power saving mode.

Alternatively, the core network device may include, in the second information, identification information of a terminal device group associated with one or more terminal devices. When the terminal device receives the second information, if the second information includes the identification information of the terminal device group associated with the terminal device, the terminal device may report, to the core network device via the network device, the capability information indicating that the terminal device supports the power saving mode. If the terminal device does not support the power saving mode, the terminal device may not need to report the capability information, or the terminal device may report the capability information indicating that the terminal device does not support the power saving mode.

Step 902: The network device sends third information. Correspondingly, the terminal device receives the third information from the network device.

After receiving the second information sent by the core network device, the network device may generate a third message. The third information may include a part or all of content of the second information. The network device may send the third information to the terminal device. The terminal device may receive the third information when being in a connected state, or may receive the third information when being in a non-connected state. This is not limited.

The third information may indicate the terminal device supporting the power saving mode to report the capability information, or the third information may indicate the terminal device supporting the power saving mode to access the network device. The third information is broadcast information, multicast information, or a paging message, and the paging message may alternatively be select signaling.

Step 903: The terminal device reports the capability information to the network device, or the terminal device supporting the power saving mode accesses a network. Correspondingly, the network device receives the capability information or a network device access message from the terminal device.

Optionally, the network device further performs the following step 904:
Step 904: The network device sends the capability information of the terminal device to the core network device. Correspondingly, the core network device receives the capability information of the terminal device from the network device.

The capability information of the terminal device may indicate that the terminal device supports the power saving mode.

Optionally, that the terminal device supports the power saving mode may be indicated by reporting a needed power saving duration configuration.

When the terminal device supports the power saving mode, the terminal device may report, to the core network device via the network device, the capability information indicating that the terminal device supports the power saving mode. If the terminal device does not support the power saving mode, the terminal device may not need to report the capability information, or the terminal device reports, to the core network device via the network device, the capability information indicating that the terminal device does not support the power saving mode.

Step 905: The core network device sends power saving duration information to the terminal device. Correspondingly, the terminal device receives the power saving duration information from the core network device.

The power saving duration information may indicate power saving duration. For descriptions of the power saving duration information, refer to descriptions of the power saving duration in step 801. Details are not described again.

Optionally, before receiving the power saving duration information from the core network device, the terminal device sends fourth indication information to the core network device.

The fourth indication information may indicate that the terminal device receives the power saving configuration.

**In** a first example, if the core network device and the network device page terminal devices in a group manner or page at least one terminal device, each paged terminal device may send the fourth indication information to the core network device via the network device after performing an access procedure.

**In** a second example, if the core network device and the network device page a single terminal device (for example, identification information of only one terminal device is included, or a paging indication to the single terminal device is included), the terminal device may directly send the fourth indication information to the core network device without performing an access procedure.

In the foregoing two examples, for descriptions of sending the fourth indication information by the terminal device to the core network device, refer to related descriptions of sending the second indication information by the terminal device to the core network device in step 803. Details are not described again.

Optionally, after receiving the power saving duration information from the core network device, the terminal device sends second indication information to the core network device.

The second indication information may indicate that the terminal device receives the power saving duration information. For descriptions of the second indication information, refer to related descriptions of sending the second indication information by the terminal device to the core network device in step 803. Details are not described again.

Optionally, the second indication information includes first duration information.

The first duration information may indicate first duration, and the first duration is duration for which the terminal device expects to activate the power saving mode.

If determining that power saving duration of the terminal device may be configured as the first duration expected by the terminal device, the core network device may resend, to the terminal device, power saving duration information indicating the first duration. If the core network device does not agree on the power saving duration information, the core network device may reconfigure power saving duration for the terminal device or maintain the previously configured power saving duration.

Step 906: The terminal device activates the power saving mode.

Duration for which the terminal device is in the power saving mode may be less than or equal to the power saving duration.

That the terminal device activates the power saving mode may alternatively be described as that the terminal device enters the power saving mode, described as that the terminal device starts the power saving mode, or described as that the terminal device performs communication in the power saving mode.

The terminal device in the power saving mode may skip receiving downlink data (or a downlink signal); or the terminal device in the power saving mode may neither receive downlink data (or a downlink signal) nor send uplink data.

In a first possible design, the terminal device activates the power saving mode based on the power saving duration information.

The power saving duration information may indicate the terminal device to activate the power saving mode. The terminal device may activate the power saving mode when receiving the power saving duration information.

In a second possible design, the terminal device receives third indication information from the network device, and activates the power saving mode based on the third indication information.

The third indication information indicates the terminal device to activate the power saving mode.

In a third possible design, the terminal device activates the power saving mode when determining that data transmission is completed.

The terminal device may determine, after sending data to the network device, that the data transmission is completed, or may determine, when receiving a message that is sent by the network device and that indicates that the data has been successfully received, that the data transmission is completed.

Before, when, or after sending third indication information, the network device may send fifth indication information to the core network device. The fifth indication information may indicate that the terminal device completes the data transmission, or the terminal device is to activate the power saving mode.

Optionally, the fifth indication information sent by the network device may indicate time at which the terminal device activates the power saving mode. The time may be absolute time, for example, a specific frame number, or specific minutes and seconds, or may be relative time, that is, a time interval from a moment at which signaling is sent, for example, several minutes, seconds and milliseconds. Alternatively, time from a next beacon (Beacon) frame/synchronization signal/system message may be indicated, and correspondingly, the terminal device also activates the power saving mode at the corresponding time.

In an implementation, when receiving the fifth indication information, the terminal device may stop the data transmission with the network device, and activate the power saving mode after stopping the data transmission with the network device.

For example, the network device may send, to the terminal device as the fifth indication information, one or more of the following indication information or messages: query response signaling, a response message, a feedback message, an acknowledgment message, an end indication, a release indication, or the like, to indicate that the data is successfully received or to indicate that the terminal device completes the data transmission. This is not limited.

Optionally, the network device further sends sixth indication information to the core network device. The sixth indication information is for requesting to release the terminal device, indicates that the network device determines to release the terminal device, or indicates that the network device completes the release of the terminal device.

Optionally, the core network device sends seventh indication information to the network device. The seventh indication information indicates that the core network device agrees to release the terminal device, or indicates that the release of the terminal device is completed.

Optionally, when the terminal device activates the power saving mode based on the fifth indication information, the core network device starts, based on the sixth indication information or the seventh indication information, power saving duration corresponding to the terminal device, so that a time point at which the terminal device starts the power saving duration is aligned with a time point at which the core network device starts the power saving duration.

For descriptions of the third possible design, refer to related descriptions of activating the power saving mode when the terminal device determines that the data transmission is completed in step 803. Details are not described again.

Optionally, in the foregoing three possible designs, before activating the power saving mode, the terminal device first starts a first timer, and when the first timer expires, the terminal device activates the power saving mode.

For descriptions of the first timer, refer to descriptions of the first timer in step 803. Details are not described again.

Based on the method shown in FIG. 9, the core network device may actively trigger a power saving configuration negotiation procedure with the terminal device by delivering the second information, and when determining, based on the capability information reported by the terminal device, that the terminal device supports the power saving mode, send the power saving duration information to the terminal device. In this way, the terminal device with a low complexity capability can activate the power saving mode, thereby reducing power consumption. In addition, because the second information is the broadcast information, the multicast information, or the paging message, that is, the core network device may simultaneously trigger the power saving configuration negotiation procedure with the one or more terminal devices, signaling overheads in the power saving configuration negotiation process can be reduced.

Based on the method shown in FIG. 9, in another implementation, based on the foregoing procedure, the power saving duration configured by the core network device for the terminal device may be cycle duration. That is, the terminal device wakes up at an interval of the power saving duration (or described as that the terminal device enters a wake-up state or enters a normal non-power saving mode after sleeping for the power saving duration each time). Optionally, the terminal device wakes up for second duration at the interval of the power saving duration, where the second duration may be configured by the core network device or the network device or specified in a protocol. The terminal device may attempt to receive the downlink data or the signal within the second duration. Optionally, the terminal device may also send the uplink data.

Optionally, the power saving duration is first duration, and the first duration is duration for which the terminal device expects to activate the power saving mode.

Different from that the core network device first negotiates with the terminal device, and sends the power saving duration information to the terminal device when determining that the terminal device supports the power saving mode in FIG. 9, refer to a method shown in FIG. 10, in which the core network device may alternatively first negotiate with the terminal device, and send the power saving duration information to the terminal device when determining that the terminal device needs to perform a power saving configuration.

FIG. 10 shows a communication method according to an embodiment of this application. As shown in FIG. 10, the method may include the following steps.

Step 1001: A core network device sends fourth information. Correspondingly, a network device receives the fourth information from the core network device.

When a function of a reader is implemented on a terminal device, the core network device may send the fourth information to the terminal device, and specifically, may send the fourth information to the terminal device via the network device.

Optionally, the fourth information may indicate that the core network device and/or the network device support/supports a configuration of a power saving mode. The fourth information may be broadcast information, multicast information, or a paging message, and the paging message may alternatively be select signaling.

Optionally, the fourth information further includes one or more of the following: identification information of the terminal device or identification information of a terminal device group associated with the terminal device.

The core network device may include identification information of one or more terminal devices in the fourth information. When the terminal device receives the fourth information, if the fourth information includes the identification information of the terminal device, the terminal device may send a configuration request to the core network device via the network device when the terminal device needs to perform a power saving configuration.

Alternatively, the core network device may include, in the fourth information, identification information of a terminal device group associated with one or more terminal devices. When the terminal device receives the fourth information, if the fourth information includes the identification information of the terminal device group associated with the terminal device, the terminal device may send a configuration request to the core network device via the network device when the terminal device needs to perform a power saving configuration.

Step 1002: The network device sends fifth information. Correspondingly, the terminal device receives the fifth information from the network device.

After receiving the fourth information sent by the core network device, the network device may generate the fifth information, where the fifth information may include a part or all of content of the fourth information. The network device may send the fifth information to the terminal device. The terminal device may receive the fifth information when being in a connected state, or may receive the fifth information when being in a non-connected state. This is not limited.

The fifth information sent by the network device may indicate that the core network device and/or the network device support/supports the configuration of the power saving mode. The fifth information may be broadcast information, multicast information, or a paging message, and the paging message may alternatively be select signaling.

For related descriptions of the fifth information, refer to related descriptions of the fourth information in step 1001. Details are not described again.

Step 1003: The terminal device sends a configuration request to the network device. Correspondingly, the network device receives the configuration request from the terminal device. The configuration request may be the configuration request sent by the terminal device to the core network device, and is sent to the core network device via the network device.

Optionally, the configuration request may be a NAS message, and may be transmitted through an air interface by using an RRC message.

Step 1004: The network device sends the configuration request of the terminal device to the core network device. Correspondingly, the core network device receives the configuration request of the terminal device from the network device.

The configuration request may be for requesting to configure the power saving mode.

The terminal device may send the configuration request to the core network device via the network device when the terminal device needs to perform the power saving configuration.

Optionally, the configuration request further includes first duration information.

The first duration information may indicate first duration, and the first duration may be duration that is of the power saving mode and that is expected by the terminal device.

If determining that power saving duration of the terminal device may be configured as the first duration expected by the terminal device, the core network device may send, to the terminal device, power saving duration information indicating the first duration.

Step 1005: The core network device sends power saving duration information to the terminal device. Correspondingly, the terminal device receives the power saving duration information from the core network device.

The power saving duration information may indicate the power saving duration.

Optionally, before receiving the power saving duration information from the core network device, the terminal device sends fourth indication information to the core network device.

The fourth indication information may indicate that the terminal device receives the power saving configuration.

Optionally, after receiving the power saving duration information from the core network device, the terminal device sends second indication information to the core network device.

The second indication information may indicate that the terminal device receives the power saving duration information.

Optionally, the second indication information includes first duration information.

The first duration information may indicate first duration, and the first duration may be duration for which the terminal device expects to activate the power saving mode.

It should be noted that, for descriptions of step 1005, refer to the foregoing related descriptions of step 905. Details are not described again.

Step 1006: The terminal device activates the power saving mode.

Duration for which the terminal device is in the power saving mode may be less than or equal to the power saving duration.

That the terminal device activates the power saving mode may alternatively be described as that the terminal device enters the power saving mode, described as that the terminal device starts the power saving mode, or described as that the terminal device performs communication in the power saving mode.

The terminal device in the power saving mode may skip receiving downlink data (or a downlink signal); or the terminal device in the power saving mode may neither receive downlink data (or a downlink signal) nor send uplink data.

**In** a first possible design, the terminal device activates the power saving mode based on the power saving duration information.

**In** a second possible design, the terminal device receives third indication information from the network device, and activates the power saving mode based on the third indication information.

**In** a third possible design, the terminal device activates the power saving mode when determining that data transmission is completed.

The terminal device may determine, after sending data to the network device, that the data transmission is completed, or may determine, when receiving a message that is sent by the network device and that indicates that the data has been successfully received, that the data transmission is completed.

Before, when, or after sending third indication information, the network device may send fifth indication information to the core network device. The fifth indication information may indicate that the terminal device completes the data transmission, or the terminal device is to activate the power saving mode.

Optionally, the fifth indication information sent by the network device may indicate time at which the terminal device activates the power saving mode. The time may be absolute time, for example, a specific frame number, or specific minutes and seconds, or may be relative time, that is, a time interval from a moment at which signaling is sent, for example, several minutes, seconds and milliseconds. Alternatively, time from a next beacon (Beacon) frame/synchronization signal/system message may be indicated, and correspondingly, the terminal device also activates the power saving mode at the corresponding time.

In an implementation, when receiving the fifth indication information, the terminal device may stop the data transmission with the network device, and activate the power saving mode after stopping the data transmission with the network device.

For example, the network device may send, to the terminal device as the fifth indication information, one or more of the following indication information or messages: query response signaling, a response message, a feedback message, an acknowledgment message, an end indication, a release indication, or the like, to indicate that the data is successfully received or to indicate that the terminal device completes the data transmission. This is not limited.

Optionally, the network device further sends sixth indication information to the core network device. The sixth indication information is for requesting to release the terminal device, indicates that the network device determines to release the terminal device, or indicates that the network device completes the release of the terminal device.

Optionally, the core network device sends seventh indication information to the network device. The seventh indication information indicates that the core network device agrees to release the terminal device, or indicates that the release of the terminal device is completed.

Optionally, when the terminal device activates the power saving mode based on the fifth indication information, the core network device starts, based on the sixth indication information or the seventh indication information, power saving duration corresponding to the terminal device, so that a time point at which the terminal device starts the power saving duration is aligned with a time point at which the core network device starts the power saving duration.

Optionally, in the foregoing three possible designs, before activating the power saving mode, the terminal device first starts a first timer, and when the first timer expires, the terminal device activates the power saving mode.

It should be noted that, for descriptions of step 1006, refer to the foregoing related descriptions of step 906. Details are not described again.

Based on the method shown in FIG. 10, the core network device may actively trigger a power saving configuration negotiation procedure with the terminal device by delivering third information, and when determining, based on the configuration request of the terminal device, that the terminal device needs to perform the power saving configuration, send the power saving duration information to the terminal device. **In** this way, the terminal device with a low complexity capability can activate the power saving mode, thereby reducing power consumption. **In** addition, because the third information is the broadcast information, the multicast information, or the paging message, that is, the core network device may simultaneously trigger the power saving configuration negotiation procedure with the one or more terminal devices, signaling overheads in the power saving configuration negotiation process can be reduced.

Based on the method shown in FIG. 10, in another implementation, based on the foregoing procedure, the power saving duration configured by the core network device for the terminal device may be cycle duration. That is, the terminal device wakes up at an interval of the power saving duration (or described as that the terminal device enters a wake-up state or enters a normal non-power saving mode after sleeping for the power saving duration each time). Optionally, the terminal device wakes up for second duration at the interval of the power saving duration, where the second duration may be configured by the core network device or the network device or specified in the protocol. The terminal device may attempt to receive the downlink data or the signal within the second duration. Optionally, the terminal device may also send the uplink data.

Optionally, the power saving duration is first duration, and the first duration is duration for which the terminal device expects to activate the power saving mode.

Based on the communication methods shown in FIG. 8 to FIG. 10, but not limited to the communication methods, that is, for all power saving procedures, for a low-capability terminal device, clock stability of the low-capability terminal device may be poor (for example, clock stability is poor due to a poor crystal oscillator). When the terminal device does not synchronize with a network side for long time, a clock or a frequency may drift.

For example, a frequency offset of the terminal device is 100 ppm. A corresponding clock drift is a drift for a maximum of 100 microseconds in one second, that is, a difference is 10⁴. For example, a frequency offset of the terminal device is 200 ppm. A corresponding clock drift is a drift for a maximum of 200 microseconds in one second. In this way, if the terminal device is in the power saving mode for long time, a difference between wake-up time of the terminal device and actual wake-up time may be large, that is, a large timing offset is generated between the terminal device and the network side.

To resolve the foregoing clock drift problem, the terminal device may enter a wake-up state periodically or non-periodically within the power saving duration, or enter the wake-up state when the duration for which the power saving mode is activated is greater than or equal to a first threshold. The terminal device receives, in the wake-up state, clock information or time information sent by the network device, to perform clock synchronization or downlink synchronization.

The time information may include a superframe, a frame, absolute time, relative time, an index value of special duration, and the like.

That the terminal device performs clock synchronization may include adjusting the clock of the terminal device, and/or adjusting the frequency offset of the terminal device. The downlink synchronization may include performing alignment between the time information obtained by the terminal in a downlink and the time information sent by a network.

For example, the clock information may be carried in one or more of the following signaling: a system message, a paging message, a random access response, a beacon frame, a multicast message, a reference signal, a synchronization signal, or the like.

Optionally, a method for designing and sending the frame or the superframe is as follows.

For example, a cycle of the beacon (Beacon) frame, the synchronization signal, or the system message (for example, a PBCH) is used as a basic unit. For example, the cycle of the synchronization signal, the beacon, or the system message is 160 ms. Assuming that the frequency offset of the terminal device is 250 ppm, that is, the corresponding clock drift is a drift for 25 ms in 100s, maximum time-offset ranges corresponding to different sleep time (or described as power saving time, power saving duration, or the like) of the terminal device are shown in Table 3:

**Table 3**

| Sleep time (h) | Time drift (s) | Time range (s) to be distinguished |
|---|---|---|
| 1 | 0.9 | >1.8 |
| 2 | 1.8 | >3.6 |
| 3 | 2.7 | >5.4 |
| 4 | 3.6 | >7.2 |
| 6 | 4.5 | >9 |
| 8 | 5.4 | >10.8 |
| 10 | 9 | >18 |
| 20 | 18 | >36 |
| 30 | 27 | >54 |
| 40 | 36 | >72 |
| 90 | 81 | >162 |

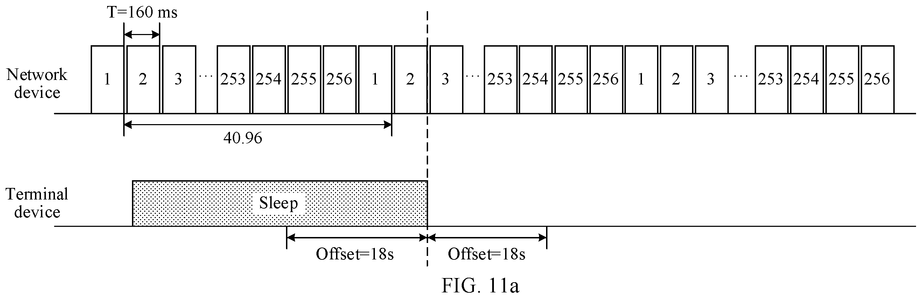

As shown in Table 3 and FIG. 11a, if the sleep time is 20 hours, when the terminal device enters the wake-up state after 20 hours, a maximum offset is 18 seconds, but may be specifically a forward offset or a backward offset. Because a frame length design needs to meet twice an offset value of maximum wake-up time of the terminal device, that is, in this example, the time drift is 36 seconds.

When the cycle 160 ms of the beacon or the system message is used as a basic frame length unit, ranges that may be indicated by designing frames of different lengths are shown in the following table 4:

**Table 4**

| Bit | Indicated time range |
|---|---|
| 10+10 | 46.6 h |
| 10+8 | 11.6 h |
| 10+6 | 2.91 h |
| 10+5 | 1.45 h |
| 10+2 | 655s |
| 10 | 163.8s |
| 8 | 40.96s |
| 7 | 20.48s |
| 6 | 10.24s |
| 5 | 5.12s |
| 4 | 2.56s |

It can be learned from Table 4 that, the offset can be corrected after 20 hours of wake-up. In this case, the frame length needs to be 8 bits. Other examples may be as follows:
The terminal device wakes up for clock adjustment every hour, and the offset from the network side may be adjusted by ±0.9s. In this case, 4-bit information needs to be carried for the clock adjustment.

The terminal device wakes up for clock adjustment every 2 hours, the offset from the network side may be adjusted by ±1.8s. In this case, 5-bit information needs to be carried for the clock adjustment.

The terminal device wakes up for clock adjustment every 6 hours, the offset from the network side may be adjusted by ±4.5s. In this case, 6-bit information needs to be carried for the clock adjustment.

The terminal device wakes up for clock adjustment every 10 hours, the offset from the network side may be adjusted is ±9s. In this case, 7-bit information needs to be carried for the clock adjustment.

Certainly, to ensure a small offset from the network side, for example, a millisecond level, the terminal device may wake up in advance before maximum sleep time, that is, the terminal device needs to wake up within a maximum time-offset range (a sum of positive and negative offsets) or a time range indicated by time information/frame information. For example, when the frame length is 8 bits, if the power saving duration is 20 hours, the terminal device may wake up in advance to receive the frame information before 20 hours, to avoid an offset of more than 10 seconds due to late wake-up. If the configured power saving duration is 40 hours, the terminal device needs to wake up at least once when the power saving duration is about 20 hours. Otherwise, if a maximum offset range or a time range (40.96) indicated by 8 bits is exceeded, the terminal device may not be able to accurately adjust the clock, and wake up before at least 40 hours next time, to synchronize with the network side in advance to at least millisecond-level precision.

In addition, a basic unit of the frame may alternatively be 10 ms, or another value. When the frame length is 10 ms, a same time range is indicated, and more bits are needed compared with the frame length of 160 ms. For example, 10.24s needs to be indicated by 10 bits.

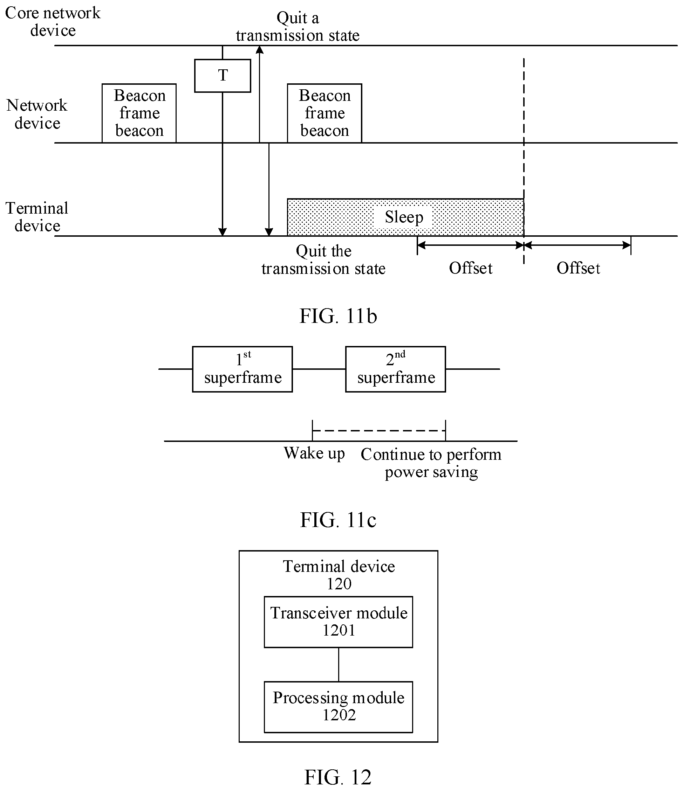

In consideration of accurate clock alignment, a time point at which the terminal device starts the power saving duration need to be aligned with a time point at which the core network device starts the power saving duration in the procedure. Two manners are mainly considered herein.
1. The terminal device starts timing after receiving an indication. For indication information received by the terminal device, refer to the foregoing embodiment, for example, a release indication. The core network device may start timing after receiving indication information or sending specific indication information, for example, may be indication information of the terminal device that the network device requests to release, or indication information that is sent by the network device to the core network device and indicates to determine to release the terminal device or indicate to complete the release of the terminal device, or indication information that is sent by the core network device to the network device and that indicates that the core network device agrees to release a message of the terminal device or to release completion of the terminal device.
2. After the terminal device leaves a transmission state, as shown in FIG. 11b, timing starts from a 1^{st} beacon/system message. Optionally, the network device notifies the core network device to start the timing. Alternatively, the network device sends indication information to the terminal device, to indicate time at which the terminal device activates the power saving mode. The time may be absolute time or relative time. The network device also needs to notify the core network device of the time at which the terminal device starts.

In addition, when sending the frame information, the network device may include a complete frame number in a broadcast configuration (for example, the synchronization signal/reference signal/beacon/system message) each time. The network device may alternatively split a complete frame number, and include split frame numbers in two or more synchronization signals/reference signals/beacons/system messages for sending (or described as that two or more sending opportunities are used for the frame numbers), that is, different synchronization signals/reference signals/beacons/system messages carry partial frame information (or carry incomplete frame information).

Optionally, the different synchronization signals/beacons/system messages carry different frame bits.

For example, the network device splits the complete frame number into two parts, and includes the two parts in two synchronization signals/reference signals/beacons/system messages for sending. One synchronization signal/reference signal/beacon/system message may include a high-order bit, and the other synchronization signal/reference signal/beacon/system message may include a low-order bit. For example, an odd-numbered frame may carry high-order n bits of the complete frame number, an even-numbered frame may carry low-order m bits of the complete frame number, and vice versa.

Optionally, the odd-numbered frame (or described as an odd-numbered synchronization signal/reference signal/beacon/system message) and the even-numbered frame (or described as an even-numbered synchronization signal/reference signal/beacon/system message) carry different bits, and the odd-numbered system message and the even-numbered system message carry the different bits.

Different synchronization signals/reference signals/beacons include the incomplete frame information, or it may be understood that the terminal device needs to receive a plurality of beacons or system messages to receive the complete frame information. An advantage of such an operation is to reduce signaling overheads of a common network configuration.

In another implementation, some synchronization signals/reference signals/beacons include the complete frame information, and some synchronization signals/reference signals/beacons carry partial information, where some carry high-order bits of the frame information, some carry medium-order bits of the frame information, and some carry the high-order bits and the low-order bits of the frame information.

In a first possible design, the network device may periodically send the superframe, the frame, or the beacon frame to the terminal device. The terminal device may enter the wake-up state periodically or non-periodically within the power saving duration, receive, in the wake-up state, the superframe, the frame, or the beacon frame sent by the network device, and perform clock synchronization based on the clock information in the superframe, the frame, or the beacon frame.

Optionally, a cycle in which the terminal device enters the wake-up state may be consistent with a cycle in which the network device sends the superframe, the frame, or the beacon frame, or may be a multiple of the cycle in which the network device sends the superframe, the frame, or the beacon frame. This is not limited.

Optionally, the cycle in which the terminal device enters the wake-up state may be pre-specified in a protocol, may be customized by the terminal device, or may be determined by the terminal device based on a maximum clock offset allowed in the protocol. This is not limited.

For example, the network device periodically sends the superframe to the terminal device. As shown in FIG. 11c, it is assumed that the superframe received by the terminal device in the wake-up state is displayed as a 2^{nd} superframe. If calculating time as a 1^{st} superframe based on the clock of the terminal device, the terminal device may adjust the clock to the 2^{nd} superframe, and then continue to enter the power saving mode.

In a second possible design, the terminal device may enter the wake-up state when the duration for which the power saving mode is activated is greater than or equal to the first threshold, and establish a connection to the network side in the wake-up state.

The terminal device may initiate a random access request to the network device in the wake-up state, and the network device may send a random access response to the terminal device based on the received random access request. The random access response may include the clock information. The terminal device may perform clock synchronization based on the clock information in the random access response.

Optionally, after establishing the connection to the network device, the terminal device may renegotiate power saving duration with the core network device, or may continue to enter the power saving mode based on the previously negotiated power saving duration. This is not limited.

Optionally, after the terminal device establishes the connection to the network device, the terminal or the core network device may send indication information, to indicate to continue to use the previously negotiated duration, or may directly enter the power saving mode based on a previous connection configuration without any indication.

Optionally, if the duration for which the terminal device is in the power saving mode is less than the first threshold, the terminal device is normally in the power saving mode, and automatically exits the power saving mode until the power saving duration expires.

In a third possible design, the terminal device enters the wake-up state periodically or non-periodically based on power saving duration configured by the network side, and establishes a connection to the network side in the wake-up state.

The terminal device may initiate a random access request to the network device in the wake-up state, and the network device may send a random access response to the terminal device based on the received random access request. The random access response may include the clock information. The terminal device may perform clock synchronization based on the clock information in the random access response.

Based on the foregoing descriptions of the clock synchronization, when the power saving time of the terminal device is long, the terminal device may receive the clock information from the network device in time, to implement clock alignment between the terminal device and the network side, and ensure that a clock offset is within an acceptable range. **In** addition, it can also be ensured that the network side can page the terminal device when the terminal device is not in a sleep state, to implement normal communication of the terminal device.

It should be noted that the methods provided in embodiments of this application may be implemented separately, or may be implemented together. This is not limited.

It may be understood that in embodiments of this application, an execution body may perform some or all of the steps in embodiments of this application. The steps or operations are merely examples. In embodiments of this application, other operations or variations of various operations may be further included. In addition, the steps may be performed in a sequence different from a sequence presented in embodiments of this application, and not all operations in embodiments of this application need to be performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, the module division is an example, and is merely a logical function division. In actual implementation, another division manner may be used.

When each functional module is obtained through division based on each corresponding function, FIG. 12 shows a terminal device 120. The terminal device 120 may perform actions performed by the terminal device in FIG. 8 to FIG. 11c.

The terminal device 120 may include a transceiver module 1201 and a processing module 1202. For example, the terminal device 120 may be a terminal device, or may be a chip used in the terminal device or another combined device, component, or the like that has a function of the foregoing terminal device. When the terminal device 120 is the terminal device, the transceiver module 1201 may be a transceiver, where the transceiver may include an antenna, a radio frequency circuit, and the like; and the processing module 1202 may be a processor (or a processing circuit), for example, a baseband processor, where the baseband processor may include one or more CPUs. When the terminal device 120 is the component that has the function of the foregoing terminal device, the transceiver module 1201 may be a radio frequency unit; and the processing module 1202 may be a processor (or a processing circuit), for example, a baseband processor. When the terminal device 120 is a chip system, the transceiver module 1201 may be an input/output interface of a chip (for example, a baseband chip); and the processing module 1202 may be a processor (or a processing circuit) of the chip system, and may include one or more central processing units. It should be understood that the transceiver module 1201 in this embodiment of this application may be implemented by the transceiver or a transceiver-related circuit component; and the processing module 1202 may be implemented by the processor or a processor-related circuit component (or referred to as the processing circuit).

For example, the transceiver module 1201 may be configured to perform all receiving and sending operations performed by the terminal device in the embodiments shown in FIG. 8 and FIG. 11c, and/or configured to support another process of the technology described in this specification. The processing module 1202 may be configured to perform all operations other than the receiving and sending operations performed by the terminal device in the embodiments shown in FIG. 8 and FIG. 11c, and/or configured to support another process of the technology described in this specification.

In another possible implementation, the transceiver module 1201 in FIG. 12 may be replaced with a transceiver, and a function of the transceiver module 1201 may be integrated into the transceiver. The processing module 1202 may be replaced with a processor, and a function of the processing module 1202 may be integrated into the processor. Further, the terminal device 120 shown in FIG. 12 may further include a memory.

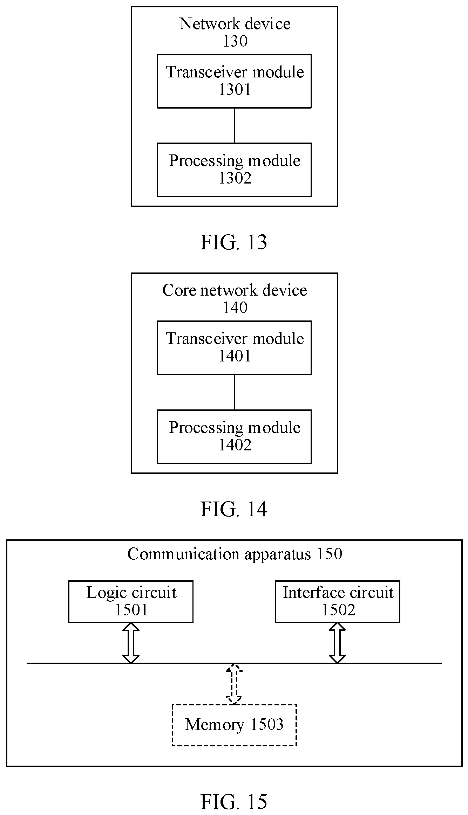

Alternatively, when the processing module 1202 is replaced with a processor, and the transceiver module 1201 is replaced with a transceiver, the terminal device 120 in this embodiment of this application may be a communication apparatus 150 shown in FIG. 15. The processor may be a logic circuit 1501, and the transceiver may be an interface circuit 1502. Further, the communication apparatus 150 shown in FIG. 15 may further include a memory 1503.

When each functional module is obtained through division based on each corresponding function, FIG. 13 shows a network device 130. The network device 130 may perform actions performed by the network device in FIG. 8 to FIG. 11c.

The network device 130 may include a transceiver module 1301 and a processing module 1302. For example, the network device 130 may be a network device, or may be a chip used in the network device or another combined device, component, or the like that has a function of the foregoing network device. When the network device 130 is the network device, the transceiver module 1301 may be a transceiver, where the transceiver may include an antenna, a radio frequency circuit, and the like; and the processing module 1302 may be a processor (or a processing circuit), for example, a baseband processor, where the baseband processor may include one or more CPUs. When the network device 130 is the component that has the function of the foregoing network device, the transceiver module 1301 may be a radio frequency unit; and the processing module 1302 may be a processor (or a processing circuit), for example, a baseband processor. When the network device 130 is a chip system, the transceiver module 1301 may be an input/output interface of a chip (for example, a baseband chip); and the processing module 1302 may be a processor (or a processing circuit) of the chip system, and may include one or more central processing units. It should be understood that the transceiver module 1301 in this embodiment of this application may be implemented by the transceiver or a transceiver-related circuit component; and the processing module 1302 may be implemented by the processor or a processor-related circuit component (or referred to as the processing circuit).

For example, the transceiver module 1301 may be configured to perform all receiving and sending operations performed by the network device in the embodiments shown in FIG. 8 and FIG. 11c, and/or configured to support another process of the technology described in this specification. The processing module 1302 may be configured to perform all operations other than receiving and sending operations performed by the network device in the embodiments shown in FIG. 8 and FIG. 11c, and/or configured to support another process of the technology described in this specification.

In another possible implementation, the transceiver module 1301 in FIG. 13 may be replaced with a transceiver, and a function of the transceiver module 1301 may be integrated into the transceiver. The processing module 1302 may be replaced with a processor, and a function of the processing module 1302 may be integrated into the processor. Further, the network device 130 shown in FIG. 13 may further include a memory.

Alternatively, when the processing module 1302 is replaced with a processor, and the transceiver module 1301 is replaced with a transceiver, the network device 130 in this embodiment of this application may be a communication apparatus 150 shown in FIG. 15. The processor may be a logic circuit 1501, and the transceiver may be an interface circuit 1502. Further, the communication apparatus 150 shown in FIG. 15 may further include a memory 1503.

When each functional module is obtained through division based on each corresponding function, FIG. 14 shows a core network device 140. The core network device 140 may perform actions performed by the core network device in FIG. 8 to FIG. 11c.

The core network device 140 may include a transceiver module 1401 and a processing module 1402. For example, the core network device 140 may be a core network device, or may be a chip used in the core network device or another combined device, component, or the like that has a function of the foregoing core network device. When the core network device 140 is the core network device, the transceiver module 1401 may be a transceiver, where the transceiver may include an antenna, a radio frequency circuit, and the like; and the processing module 1402 may be a processor (or a processing circuit), for example, a baseband processor, where the baseband processor may include one or more CPUs. When the core network device 140 is the component that has the function of the foregoing core network device, the transceiver module 1401 may be a radio frequency unit; and the processing module 1402 may be a processor (or a processing circuit), for example, a baseband processor. When the core network device 140 is a chip system, the transceiver module 1401 may be an input/output interface of a chip (for example, a baseband chip); and the processing module 1402 may be a processor (or a processing circuit) of the chip system, and may include one or more central processing units. It should be understood that the transceiver module 1401 in this embodiment of this application may be implemented by the transceiver or a transceiver-related circuit component; and the processing module 1402 may be implemented by the processor or a processor-related circuit component (or referred to as the processing circuit).

For example, the transceiver module 1401 may be configured to perform all receiving and sending operations performed by the core network device in the embodiments shown in FIG. 8 and FIG. 11c, and/or configured to support another process of the technology described in this specification. The processing module 1402 may be configured to perform all operations other than the receiving and sending operations performed by the core network device in the embodiments shown in FIG. 8 and FIG. 11c, and/or configured to support another process of the technology described in this specification.

In another possible implementation, the transceiver module 1401 in FIG. 14 may be replaced with a transceiver, and a function of the transceiver module 1401 may be integrated into the transceiver. The processing module 1402 may be replaced with a processor, and a function of the processing module 1402 may be integrated into the processor. Further, the core network device 140 shown in FIG. 14 may further include a memory.

Alternatively, when the processing module 1402 is replaced with a processor, and the transceiver module 1401 is replaced with a transceiver, the core network device 140 in this embodiment of this application may be a communication apparatus 150 shown in FIG. 15. The processor may be a logic circuit 1501, and the transceiver may be an interface circuit 1502. Further, the communication apparatus 150 shown in FIG. 15 may further include a memory 1503.

An embodiment of this application further provides a computer program product. When the computer program product is executed by a computer, a function in any one of the foregoing method embodiments may be implemented.

An embodiment of this application further provides a computer program. When the computer program is executed by a computer, a function in any one of the foregoing method embodiments may be implemented.

Embodiments of this application further provide a computer-readable storage medium. All or some of procedures in the foregoing method embodiments may be implemented by a computer program instructing related hardware. The program may be stored in the computer-readable storage medium. When the program is executed, the procedures in the foregoing method embodiments may be included. The computer-readable storage medium may be an internal storage unit in the terminal in any one of the foregoing embodiments (including a data transmit end and/or a data receive end), for example, a hard disk or memory of the terminal. The computer-readable storage medium may alternatively be an external storage device of the foregoing terminal, for example, a plug-in hard disk drive, a smart media card (smart media card, SMC), a secure digital (secure digital, SD) card, and a flash card (flash card) that are configured on the foregoing terminal. Further, the computer-readable storage medium may further include both the internal storage unit and the external storage device of the foregoing terminal. The computer-readable storage medium is configured to store the computer program and other programs and data needed by the foregoing terminal. The computer-readable storage medium may be further configured to temporarily store data that has been output or is to be output.

It should be noted that in the specification, claims, and accompanying drawings of this application, the terms "first", "second", and the like are intended to distinguish between different objects, but are not intended to describe a particular sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

Through descriptions of the foregoing implementations, a person skilled in the art may clearly understand that, for the purpose of convenient and brief description, the division into the foregoing functional modules is used as an example for description. In actual application, the foregoing functions may be allocated to different modules and completed based on a requirement, that is, an inner structure of an apparatus is divided into different functional modules to implement all or some of the functions described above.

In the several embodiments provided in this application, it should be understood that the disclosed apparatuses and methods may be implemented in other manners. For example, the described apparatus embodiments are merely examples. For example, the division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may be one or more physical units, may be located in one place, or may be distributed on different places. Some or all of the units may be selected based on an actual requirement to achieve the objectives of the solutions of the embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such understanding, the technical solutions of embodiments of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps in the methods described in embodiments of this application. The foregoing storage medium includes any medium that can store program code, such as a USB flash drive, a removable hard disk, a ROM, a RAM, a magnetic disk, or an optical disc.

## Claims

1. A communication method, comprising:
receiving, by a terminal device, first information from a network device, wherein the first information comprises power saving duration information, the power saving duration information indicates power saving duration, and the first information is broadcast information, multicast information, or a paging message; and
activating, by the terminal device, a power saving mode, wherein duration for which the terminal device is in the power saving mode is less than or equal to the power saving duration.

2. The method according to claim 1, wherein
skipping, by the terminal device in the power saving mode, receiving downlink data; or
neither receiving, by the terminal device in the power saving mode, downlink data nor sending uplink data.

3. The method according to claim 1 or 2, wherein
the first information further comprises one or more of the following: identification information of the terminal device, identification information of a terminal device group associated with the terminal device, or first indication information; and
the first indication information indicates that the power saving duration information is used for a terminal device supporting the power saving mode.

4. The method according to any one of claims 1 to 3, wherein before activating, by the terminal device, the power saving mode, the method further comprises:
sending, by the terminal device, second indication information to a core network device, wherein the second indication information indicates that the terminal device receives the power saving duration information.

5. The method according to any one of claims 1 to 4, wherein activating, by the terminal device, the power saving mode comprises:
activating, by the terminal device, the power saving mode based on the first information, wherein the first information indicates the terminal device to activate the power saving mode;
receiving, by the terminal device, third indication information from the network device, and activating the power saving mode based on the third indication information, wherein the third indication information indicates the terminal device to activate the power saving mode; or
activating, by the terminal device, the power saving mode when determining that data transmission is completed.

6. The method according to any one of claims 1 to 5, wherein before activating, by the terminal device, the power saving mode, the method further comprises:
the first information comprises a security parameter; and
determining, by the terminal device based on the security parameter, that the first information is valid, wherein
the security parameter comprises one or more of the following: a random number, a message authentication code for integrity MAC-I, a key index, a group key index, or an encryption algorithm.

7. The method according to any one of claims 1 to 6, wherein activating, by the terminal device, the power saving mode comprises:
the first information further comprises configuration information of a first timer, and the configuration information of the first timer indicates the first timer; and
activating, by the terminal device, the power saving mode when the first timer expires.

8. The method according to any one of claims 1 to 7, wherein after activating, by the terminal device, the power saving mode, the method further comprises:
periodically entering, by the terminal device, a wake-up state within the power saving duration, or entering, by the terminal device, the wake-up state when the duration for which the power saving mode is activated is greater than or equal to a first threshold;
receiving, by the terminal device, clock information from the network device; and
performing, by the terminal device, clock synchronization based on the clock information.

9. The method according to claim 8, wherein
the clock information is carried in one or more of the following signaling: a random access response, a superframe, a frame, or a beacon frame.

10. A communication method, comprising:
receiving, by a network device, first information from a core network device, wherein the first information comprises power saving duration information, the power saving duration information indicates power saving duration, and the first information is broadcast information, multicast information, or a paging message; and
sending, by the network device, the first information.

11. The method according to claim 10, wherein
the first information further comprises one or more of the following: identification information of a terminal device, identification information of a terminal device group associated with the terminal device, or first indication information; and
the first indication information indicates that the power saving duration information is used for a terminal device supporting a power saving mode.

12. The method according to claim 10 or 11, wherein
the first information further comprises a security parameter, and the security parameter comprises one or more of the following: a random number, a message authentication code for integrity MAC-I, a key index, or a group key index.

13. The method according to any one of claims 10 to 12, wherein the method further comprises:
sending, by the network device, third indication information to the terminal device, wherein the third indication information indicates the terminal device to activate the power saving mode.

14. The method according to any one of claims 10 to 13, wherein
the first information further comprises configuration information of a first timer, the configuration information of the first timer indicates the first timer, and the first timer is used by the terminal device to activate the power saving mode when the first timer expires.

15. The method according to any one of claims 10 to 14, wherein the method further comprises:
sending, by the network device, clock information to the terminal device, wherein the clock information is used by the terminal device to perform clock synchronization.

16. The method according to claim 15, wherein
the clock information is carried in one or more of the following signaling: a random access response, a superframe, a frame, or a beacon frame.

17. A communication method, comprising:
determining, by a core network device, first information, wherein the first information comprises power saving duration information, the power saving duration information indicates power saving duration, and the first information is broadcast information, multicast information, or a paging message; and
sending, by the core network device, the first information.

18. The method according to claim 17, wherein the method further comprises:
receiving, by the core network device, second indication information from a terminal device, wherein the second indication information indicates that the terminal device receives the power saving duration information.

19. The method according to claim 17 or 18, wherein
the first information further comprises one or more of the following: identification information of the terminal device, identification information of a terminal device group associated with the terminal device, or first indication information; and
the first indication information indicates that the power saving duration information is used for a terminal device supporting a power saving mode.

20. The method according to any one of claims 17 to 19, wherein
the first information further comprises a security parameter, and the security parameter comprises one or more of the following: a random number, a message authentication code for integrity MAC-I, a key index, or a group key index.

21. The method according to any one of claims 17 to 20, wherein
the first information further comprises configuration information of a first timer, the configuration information of the first timer indicates the first timer, and the first timer is used by the terminal device to activate the power saving mode when the first timer expires.

22. A communication apparatus, comprising:
a transceiver module, configured to receive first information from a network device, wherein the first information comprises power saving duration information, the power saving duration information indicates power saving duration, and the first information is broadcast information, multicast information, or a paging message; and
a processing module, configured to activate a power saving mode, wherein duration for which a terminal device is in the power saving mode is less than or equal to the power saving duration.

23. A communication apparatus, comprising:
a transceiver module, configured to receive first information from a core network device, wherein the first information comprises power saving duration information, the power saving duration information indicates power saving duration, and the first information is broadcast information, multicast information, or a paging message, wherein
the transceiver module is further configured to send the first information.

24. A communication apparatus, comprising:
a processing module, configured to determine first information, wherein the first information comprises power saving duration information, the power saving duration information indicates power saving duration, and the first information is broadcast information, multicast information, or a paging message; and
a transceiver module, configured to send the first information.

25. A communication apparatus, wherein the communication apparatus comprises a processor, and the processor is configured to run a computer program or instructions, to enable the communication apparatus to perform the communication method according to any one of claims 1 to 9, to perform the communication method according to any one of claims 10 to 16, or to perform the communication method according to any one of claims 17 to 21.

26. A computer-readable storage medium, wherein the computer-readable storage medium stores computer instructions or a program, and when the computer instructions or the program is run on a computer, the communication method according to any one of claims 1 to 9 is performed, the communication method according to any one of claims 10 to 16 is performed, or the communication method according to any one of claims 17 to 21 is performed.

27. A computer program product, wherein the computer program product comprises computer instructions, and when some or all of the computer instructions are run on a computer, the communication method according to any one of claims 1 to 9 is performed, the communication method according to any one of claims 10 to 16 is performed, or the communication method according to any one of claims 17 to 21 is performed.
